# EUROPÄISCHE PATENTSCHRIFT

(11) **EP 1 973 637 B1**
(45) Veröffentlichungstag und Bekanntmachung des Hinweises auf die Patenterteilung: **17.08.2011**
(21) Anmeldenummer: 07702649.0
(22) Anmeldetag: 10.01.2007
(51) Int. Cl.: C09D 7/02, C09D 5/02

(54) **PULVERLACKSUSPENSIONEN (PULVERSLURRIES), HERSTELLBAR IN DER GEGENWART MINDESTENS EINES EMULGATOR COPOLYMERISATES, VERFAHREN ZU IHRER HERSTELLUNG UND IHRE VERWENDUNG**
POWDER COATING SUSPENSIONS (POWDER SLURRIES), PROCESS FOR PRODUCING THEM AND THEIR USE
SUSPENSIONS DE LAQUE PULVERULENTE (PATES PULVERULENTES), LEUR PROCEDE DE FABRICATION ET LEUR UTILISATION

(30) Priorität: 12.01.2006 DE 102006001529
(43) Veröffentlichungstag der Anmeldung: 01.10.2008
(73) Patentinhaber: BASF Coatings GmbH, 48165 Münster (DE)
(72) Erfinder: ALPERT, Christina, 18059 Rostock (DE); RINK, Heinz-Peter, 48153 Münster (DE); JUNG, Werner-Alfons, 59387 Ascheberg (DE); WESSLING, Elisabeth, 48282 Emsdetten (DE); OBERHOFF, Markus, 48317 Drensteinfurt (DE); DANNER, Thomas, 69469 Weinheim (DE); BAUDER, Andreas, 68199 Mannheim (DE)
(74) Vertreter: Leifert & Steffan
(86) Internationale Anmeldenummer: PCT/EP2007/000145
(87) Internationale Veröffentlichungsnummer: WO 2007/082656

(56) Entgegenhaltungen:
- WO-A-03/070799
- DE-A1- 10 126 649
- DE-A1- 10 126 651

## Beschreibung

### Gebiet der Erfindung

Die vorliegende Erfindung betrifft neue Pulverlacksuspensionen (Pulverslurries) , herstellbar durch ein Emulgierverfahren. Außerdem betrifft die vorliegende Erfindung ein Verfahren zur Herstellung neuer Putverlacksuspensionen (Pulverslurries) durch Emulgierung. Außerdem betrifft die vorliegende Erfindung die Verwendung der neuen Pulverladcsuspensionen Pulverslurries) als Beschichtungsstoffe, Klebstoffe und Dichtungsmassen oder zu deren Herstellung sowie die Verwendung der Beschichtungsstoffe, Klebstoffe und Dichtungsmassen für die Herstellung von Beschichtungen, Klebschichten und Dichtungen.

### Stand der Technik

### Pulverslurries und Pulvertacke, die herstellbar sind, indem man

(1) mindestens eine flüssige Komponente (B), enthaltend mindestens einen flüssigen oder verflüssigten Bestandteil einer Pulverslurry oder eines Pulverlacks, in einem wässrigen Medium (C) in der Gegenwart eines Emulgators, dessen wässrige Lösung oder Dispersion bei der kritischen Micellbildungskonzentration (KMK) eine Oberflächenspannung >30 mN/m hat, emulgiert, wodurch eine wässrige Emulsion flüssiger Partikel (D) resultiert,
(2) die Emulsion abkühlen läßt, so dass sich eine Suspension dimensionsstabiler Partikel (D), d. h. die Pulverslurry, bildet,
   und wobei die Pulverlacke herstellbar sind, indem man
(3) die dimensionsstabilen Partikel (D), d. h. den Pulverlack, isoliert,
   sind aus der deutschen Patentanmeldung DE 101 26 651 A1 bekannt. Bekanntermaßen werden als Emulgatoren vorzugsweise Copolymerisate, die durch ein- oder mehrstufige radikalische Copolymerisation von
   - mindestens einem ersten olefinisch ungesättigten Monomer und
   - mindestens einem zweiten, vom ersten olefinisch ungesättigten Monomer verschiedenen, olefinisch ungesättigten Monomer der allgemeinen Formel I

      R¹R²C=CR³R⁴ (I),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wässrigen Medium herstellbar sind, als Emulgatoren in einer Menge von 0,01 bis 5 Gew.%, bezogen auf die Menge der geschmolzenen oder festen Partikel und der Emulgatoren, verwendet.

WO 03/070799 A offenbart ein Verfahren zur Herstellung von wässrigen Dispersionen von Blockmischpolymerisaten durch zwei- oder mehrstufige, kontrollierte radikalische Blockmischpolymerisation in einem wässrigen Medium, bei dem man: (1) in einer ersten Sufe: (a) mindestens ein olefinisch ungesättigtes Monomer; und (b) mindestens ein vom olefinisch ungesättigten Monomer (a) verschiedenes olefinisch ungesättigtes Monomer der allgemeinen Formel (I) R¹R²C= CR³R⁴ (I), worin die Reste R¹, R², R³ und R⁴ jeweils unabhängig voneinander für Wasserstoffatome oder organische Reste stehen mit der Maßgabe, dass mindestens zwei Reste für Arylreste stehen; copolymerisiert, wobei das in der Stufe (1) eingesetzte wässrige Medium mindestens die Gesamtmenge des wässrigen Mediums bildet, in dem das Blockmischpolymerisat dispergiert ist, wonach, man; (2) in einer zweiten Stufe mindestens ein weiteres Monomer (a) in der Gegenwart des in der ersten Stufe gebildeten Copolymerisats nach Zugabe geringer Mengen oder ohne Zugabe von radikalischen Initiatoren (co)polymerisiert.

Die wässrigen Dispersionen von Blockmischpolymerisaten können als Emulgatoren, Stabilisatoren und Dispergiermittel, als Beschichtungsstoffe, Klebstoffe und Dichtungsmassen oder zu deren Herstellung sowie für die Herstellung von Formkörpern und Folien verwendet werden.

Die bekannten Pulverslurries und Pulverlacke sind nach dem Emulgierverfahren in einfacher Weise zuverlässig und reproduzierbar herzustellen und erfüllen vorgegebene Spezifikationen sicher. Sie liefern Beschichtungen, insbesondere ein- oder mehrschichtige farb- und/oder effektgebende Lackierungen, Kombinationseffektschichten und Klartackierungen, die sehr gute optische Eigenschaften und eine sehr hohe Licht-, Chemikalien-, Wasser-, Schwitzwasser- und Witterungsbeständigkeit aufweisen. Insbesondere sind sie frei von Trübungen und Inhomogenitäten. Sie sind hart, flexibel und kratzfest. Sie weisen ein sehr gutes Reflow-Verhalten, eine hervorragende Zwischenschichthaftung und eine gute bis sehr gute Haftung zu üblichen und bekannten Autoreparaturlackierungen auf.

Allerdings lässt die Scherstabilität der bekannten Pulverslurries bei der ESTA-Applikation noch zu wünschen übrig.

Außerdem zeigen die bekannten Pulverslurries und Pulverlacke manchmal einen unbefriedigenden Verlauf, der ihre ansonsten sehr guten anwendungstechnischen Eigenschaften schmälert.

Des Weiteren müssen Glanz und Haze der aus den bekannten Pulverslurries und Pulverlacken hergestellten Beschichtungen weiter verbessert werden, um den stetig wachsenden Ansprüchen des Marktes, insbesondere der Automobilhersteller und deren Kunden, in vollem Umfang zu genügen.

Nicht zuletzt wäre es wünschenswert, Alternativen zu den Stabilisatoren, Dispergiermitteln oder Emulgatoren der deutschen Patentanmeldung DE 101 26 651 A1 zur Verfügung zu haben, um die vorstehend genannten Aufgaben in besonders vorteilhaft Weise zu lösen und das Instrumentarium zur Lösung zukünftig auftauchender technischer Probleme bei Dispersionen zu erweitern.

### Aufgaben der Erfindung

Aufgaben der vorliegenden Erfindung sind insbesondere, neue Pulverlacksuspensionen (Pulverslurries) , herstellbar durch ein Emulgierverfahren, zu finden, die sich in einfacher Weise zuverlässig und reproduzierbar herstellen lassen und vorgegebene Spezifikationen sicher erfüllen. Insbesondere sollen die neuen Pulverslurries eine hohe Scherstabilität bei der ESTA-Applikation aufweisen.

Vor allem sollen die neuen Pulverslurries Beschichtungen, insbesondere ein- oder mehrschichtige farb- und/oder effektgebende Lackierungen, Kombinationseffektschichten und Klarlackierungen, liefern, die sehr gute optische Eigenschaften und eine sehr hohe Licht-, Chemikalien-, Wasser-, Schwitzwasser- und Witterungsbeständigkeit, ein sehr gutes Reflow-Verhalten, eine hervorragende Zwischenschichthaftung und eine sehr gute Haftung zu üblichen und bekannten Autoreparaturlackierungen aufweisen sowie hart, flexibel und kratzfest und frei von Trübungen und Inhomogenitäten sind. Dabei sollen die neuen Beschichtungen hinsichtlich Glanz und Haze weiter verbessert sein.

Außerdem ist es eine Aufgabe der vorliegenden Erfindung, ein neues Verfahren zur Herstellung von Pulverlacksuspensionen (Pulverslurries) zu finden, das in einfacher Weise zuverlässig und reproduzierbar spezifikationsgerechte Pulverslurries liefert.

Des Weiteren ist es eine Aufgabe der vorliegenden Erfindung, neue Stabilisatoren, Dispergiermittel oder Emulgatoren für Verfahren zur Herstellung von Pulverslurries durch Emulgierung bereitzustellen, die die zunächst entstehenden emulgierten flüssigen Partikel und die nach der Abkühlung der Emulsion resultierenden dimensionsstabilen Pulverlackpartikel beide zugleich in dem erforderlichen Maße stabilisieren und die eine hervorragende Alternative zu den bisher bekannten Stabilisatoren, Dispergierungmittel oder Emulgatoren bieten.

### Erfindungsgemäße Lösung

Demgemäß wurden die neuen Pulverlacksuspensionen (Pulverslurries) gefunden, herstellbar in der Gegenwart mindestens eines Emulgators (A), wobei die Pulverslurries herstellbar sind, indem man
(1) mindestens eine flüssige Komponente (B), enthaltend mindestens einen flüssigen oder verflüssigten Bestandteil einer Pulverslurry oder eines Pulverlacks, in einem wässrigen Medium (C) emulgiert, wodurch eine wässrige Emulsion flüssiger Partikel (D) resultiert,
(2) die Emulsion abkühlen läßt, so dass sich eine Suspension dimensionsstabiler Partikel (D), d. h. die Pulverslurry, bildet,
   wobei der Emulgator (A) eine Hydroxylzahl von 50 bis 250 mg KOH/g aufweist und aus der Gruppe der Copolymerisate, herstellbar durch ein- oder mehrstufige radikalische Copolymerisation in einem wässrigen Medium von
   (a1) mindestens einem hydroxylgruppenhaltigen, olefinisch ungesättigten Monomer und
   (a2) mindestens einem vom olefinisch ungesättigten Monomer (a1) verschiedenen, olefinisch ungesättigten Terpenkohlenwasserstoff ausgewählt ist.

Im Folgenden werden die neuen Pulverlacksuspensionen (Pulverslurries) als "erfindungsgemäße Pulverslurries bezeichnet.

Außerdem wurde das neue Verfahren zur Herstellung der erfindungsgemäßen Pulverslurries in der Gegenwart eines Emulgators (A) gefunden, bei dem man
(1) mindestens eine flüssige Komponente (B), enthaltend mindestens einen flüssigen oder verflüssigten Bestandteil einer Pulverslurry oder eines Pulverlacks, in einem wässrigen Medium (C) emulgiert, wodurch eine wässrige Emulsion flüssiger Partikel (D) resultiert, und
(2) die Emulsion abkühlen lässt, so dass sich eine Suspension dimensionsstabiler Partikel (D), d. h. die Pulversluny, bildet.

Im Folgenden wird das neue Verfahren zur Herstellung von Pulverlacksuspensionen (Pulverslurries) durch Schmelzeemulgierung als "erfindungsgemäßes Verfahren" bezeichnet.

Nicht zuletzt wurde die neue Verwendung von Copolymerisaten (A) einer Hydroxylzahl von 50 bis 250 mg KOH/g, herstellbar durch ein- oder mehrstufige radikalische Copolymerisation in einem wässrigen Medium von
(a1) mindestens einem olefinisch ungesättigten Monomer und
(a2) mindestens einem vom olefinisch ungesättigten Monomer (a1) verschiedenen, olefinisch ungesättigten Terpenkohlenwasserstoff
als Emulgatoren gefunden, was im Folgenden als »erfindungsgemäße Verwendung« bezeichnet wird.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgaben, die der vorliegenden Erfindung zugrunde lagen, mit Hilfe der erfindungsgemäßen Verwendung, des erfindungsgemäßen Verfahrens und der erfindungsgemäßen Pulverslurries gelöst werden konnten.

Insbesondere überraschte, dass gerade die Copolymerisate (A) die erforderlichen Eigenschaften aufwiesen, um für das erfindungsgemäße Verfahren und die erfindungsgemäße Verwendung in Betracht zu kommen. Noch mehr überraschte, dass sie insbesondere im Rahmen des erfindungsgemäßen Verfahrens eine hervorragende Alternative zu den bisher bekannten Emulgatoren boten und die zunächst entstehenden emulgierten flüssigen Partikel (D) und die nach der Abkühlung der Emulsion resultierenden dimensionsstabilen Partikel (D) beide zugleich in dem erforderlichen Maße stabilisierten. Somit konnten sie das Instrumentarium zur Lösung zukünftig auftauchender technischer Probleme auf dem Gebiet der Emulgatoren, Suspensionen und Emulsionen allgemein und der Herstellung von Pulverlacksuspensionen (Pulverslurries) im Speziellen erheblich erweitern und verbessern.

Des Weiteren war es überraschend, dass sich die erfindungsgemäßen Pulverslurries insbesondere nach dem erfindungsgemäßen Verfahren in einfacher Weise zuverlässig und reproduzierbar herstellen ließen, vorgegebene Spezifikationen sicher erfüllten und sich hervorragend verarbeiten ließen. Insbesondere wiesen die neuen Pulverslurries eine hohe Scherstabilität bei der ESTA-Applikation auf.

Überraschenderweise lieferten die erfindungsgemäßen Pulverslurries Beschichtungen, insbesondere ein- oder mehrschichtige farb- und/oder effektgebende Lackierungen, Kombinationseffektschichten und Klarlackierungen, die sehr gute optische Eigenschaften und eine sehr hohe Licht-, Chemikalien-, Wasser-, Schwitzwasser und Witterungsbeständigkeit, ein sehr gutes Reflow-Verhalten, eine hervorragende Zwischenschichthaftung und eine sehr gute Haftung zu üblichen und bekannten Autoreparaturlackierungen aufwiesen sowie hart, flexibel und kratzfest und frei von Trübungen und Inhomogenitäten waren. Dabei waren die neuen Beschichtungen hinsichtlich Glanz und Haze weiter verbessert.

### Ausführliche Beschreibung der Erfindung

Erfindungsgemäß wird für die Herstellung der erfindungsgemäßen Pulverslurries mindestens ein, insbesondere ein, Emulgator (A) verwendet. Die Menge des Emulgators (A) kann breit variieren und so hervorragend den Erfordernissen des Einzelfalls angepasst werden. Vorzugsweise wird der Emulgator (A) in einer Menge eingesetzt, dass die nachstehend im Detail beschriebenen wässrigen Emulsionen der Partikel (D), jeweils bezogen auf ihren Festkörpergehalt, 0,01 bis 1, vorzugsweise 0,1 bis 0,5 und insbesondere 0,15 bis 0,4 Gew.-% des Emulgators (A) enthalten.

Hier und im Folgenden wird unter »Festkörpergehalt«, die Summe der Bestandteile der wässrigen Emulsionen der Partikel (D) verstanden, die den Festkörper der aus den erfindungsgemäßen Pulverslurries hergestellten erfindungsgemäßen Beschichtungen, Klebschichten und Dichtungen, insbesondere Beschichtungen, aufbauen. Vorzugsweise ist der überwiegende Anteil dieser Bestandteile, d. h. mehr als 50 Gew.-%, bevorzugt mehr als 60 Gew.-% und insbesondere mehr als 70 Gew.-%, jeweils bezogen auf die Summe dieser Bestandteile, in den Partikeln (D) konzentriert. Bevorzugt sind alle betreffenden Bestandteile in den Partikeln (D) enthalten.

Erfindungsgemäß werden als Emulgatoren (A) Copolymerisate (A) einer Hydroxylzahl von 50 bis 250 mg KOH/g eingesetzt, die aus der Gruppe der Copolymerisate, herstellbar durch ein- oder mehrstufige radikalische Copolymerisation in einem wässrigen Medium von
(a1) mindestens einem hydroxylgruppenhaltigen, olefinisch ungesättigten Monomer und
(a2) mindestens einem, insbesondere einem, vom olefinisch ungesättigten Monomer (a1) verschiedenen, olefinisch ungesättigten Terpenkohlenwasserstoff
ausgewählt werden.

Als Monomeren (a1) können alle üblichen und bekannten, hydroxylgruppenhaltigen, olefinisch ungesättigten Monomere verwendet werden. Beispiele gut geeigneter Monomere (a1) sind Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid efiältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bevorzugt bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat. -monomethacrylat, - monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di-oder -triallylether. Im Allgemeinen werden die höherfunktionellen Monomere (a1) in untergeordneten Mengen, d. h. in Mengen, die nicht zur Vernetzung oder Gelierung der Copolymerisate (A) führen, verwendet.

Bei der Herstellung der Copolymerisate (A) werden die Monomeren (a1) in Mengen verwendet, dass die Copolymerisate (A) eine Hydroxylzahl von 50 bis 250, bevorzugt 80 bis 220 und insbesondere 100 bis 200 mg KOH/g aufweisen.

Neben den erfindungsgemäβ einzusetzenden, von den Monomeren (a1) verschiedenen, definisch ungesätligten Terpenkolenwasserstoffen (a2), können zusätzlich Monomere der allgemeinen Formel I eingesetzt werden.

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcydoalkylreste sind Methylencyclohexan, Ethylencyclohexan oder Propan-1,3-diyl-cyclohexan.

Beispiele geeigneter Cydoalkylalkylreste sind 2-, 3- oder 4-Methyl-, -Ethyl-, -Propyl- oder - Butytcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder - Butylphen-1-yl.

Beispiele geeigneter Arylcydoalkylreste sind 2-, 3- oder 4-Cyclohexylphen-1-yl.

Die vorstehend beschriebenen Reste R¹, R², R³ und R⁴ können substituiert sein. Hierzu können Elektronen ziehende oder Elektronen schiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-. Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N.N-Dipropylamino, N,N-Diphenylamino, N,N-Dicyclohexylamino, N-Cyclohexyl-N-methylamino oder N-Ethyl-N-methylamino.

Beispiele für Monomere der allymeinen formel I sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Die Monomeren der allymeinen Formel I können einzeln oder als Gemisch aus mindestens zwei Monomeren verwendet werden. der allymeinen Formel I

Hinsichtlich der Reaktionsführung und der Eigenschaften der resultierenden Copolymerisate (A), insbesondere der Acrylatcopolymerisate (A), ist Diphenylethylen von ganz besonderem Vorteil und wird deshalb ganz besonders bevorzugt als Monomer der allgemeinen Formel I verwendet.

Des Weiterern werden erfindungsgemäβ olefinisch ungesättigte Terpenkohlenwasserstoffe (a2) verwendet

Die olefinisch ungesättigten Terpenkohlenwasserstoffe (a2) sind übliche und bekannte, natürlich vorkommende oder synthetische Verbindungen. Vorzugsweise werden olefinisch ungesättigte Terpenkohlenwasserstoffe verwendet, die keine reaktiven funktionellen Gruppen, wie Hydroxylgruppen, Aminogruppen oder Carbonylgruppen, enthalten.

Bevorzugt wird der olefinisch ungesättigte Terpenkohlenwasserstoff (a2) aus der Gruppe, bestehend aus acyclischen Diterpenen, monocyclischen Terpenen, bicyclischen Terpenen, acyclischen Sesquiterpenen, monocyclischen Sesquiterpenen, bicyclischen Sesquiterpenen, tricyclischen Sesquiterpenen, acyclischen Diterpenen, monocyclischen Diterpenen und tricyclischen Diterpenen, ausgewählt.

Besonders bevorzugt wird der Terpenkohlenwasserstoff (a2) aus der Gruppe, bestehend aus acyclischen Monoterpenen, monocyclischen Terpenen und bicyclischen Terpenen, ausgewählt.

Ganz besonders bevorzugt wird der Terpenkohlenwasserstoff (a2) aus der Gruppe, bestehend aus Ocimen, Myrcen, den Menthenen, den Menthadienen, alpha-Pinen und beta-Pinen, ausgewählt.

Insbesondere werden die Menthadiene (a2) aus der Gruppe, bestehend aus alpha-Terpinen, beta-Terpinen, gamma-Terpinen, Terpinolen, alpha-Phellandren, beta-Phellandren, Limonen und Dipenten, ausgewählt.

Speziell wird gamma-Terpinen als Monomer (a2) eingesetzt.

Als Monomere können rebenben Tepenkohlenewasserstoffen (a2) nicht zuletzt dimere alpha-Alkylvinylaromaten und vorzugsweise dimere alpha-Alkylstyrole insbesondere dimeres alpha-Methylstyrol eingesetzt werden.

Die vorstehend beschriebenen Terpenkohlenwasserstoffe (a2) und gegebenenfalls vohanderen olefinisch ungesättigten Monomere können noch mit mindestens einem hiervon verschiedenen, olefinisch ungesättigten der allgemeinen Formel I sowie die gegebenenfalls vorhandenen dimeren alpha-Alkylvinylaramaden Monomeren (a3) copolymerisiert werden.

Beispiele geeigneter Monomere (a3) sind:
(a31) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1H-inden-methanol- oder tert.-Butylcydohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder - tetra(meth)acrylat enthalten. Unter untergeordneten Mengen an höherfunktionellen Monomeren sind solche Mengen zu verstehen, welche nicht zur Vernetzung oder Gelierung der Copolymerisate (A) führen.
(a32) Monomere, welche mindestens eine Aminogruppe, Alkoxymethylaminogruppe oder Iminogruppe pro Molekül trägen und im wesentlichen säuregruppenfrei sind, wie N,N-Dimethylaminoethylacrylat, N,N-Diethylaminoethylmethacrylat, Allylamin oder N-Methyliminoethylacrylat oder N,N-Di(methoxymethyl)-aminoethylacrylat und -methacrylat oder N,N-Di(butoxymethyl)aminopropylacrylat und - methacrylat.
(a33) Monomere, welche mindestens eine Säuregruppe, die in die entsprechende Säureaniongruppe überführbar ist, pro Molekül tragen, wie Acrylsäure, beta-Carboxyethylacrylat, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono-(meth)acryloyloxyethylester, Bernsteinsäuremono(meth)acryloyloxyethylester oder Phthalsäuremono(meth)acryloyloxyethylester.
(a34) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a34) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
(a35) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
(a36) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
(a37) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid. Monomere der letztgenannten Art werden vor allem für die Herstellung von selbstvernetzenden Bindemitteln verwendet.
(a38) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
(a39) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alpha-methylstyrol (alle Isomere) und/oder p-Vinylbenzsolsulfonsäure.
(a310) Nitrile wie Acrylnitril und/oder Methacrylnitril.
(a311) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
(a312) Allylverbindungen, insbesondere Allylether und -ester wie Allylmethyl-, -ethyl-, - propyl- oder -butylether oder Allylacetat, -propionat oder -butyrat.
(a313) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US-A-4,754,014 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind
   und/oder
(a314) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestern der (Meth)Acrylsäure (vgl. Monomere a112).

Jedes der vorstehend genannten Monomeren (a31) bis (a314) kann für sich alleine mit dem Monomeren (a1) und (a2) polymerisiert werden. Erfindungsgemäß ist es indes von Vorteil, mindestens zwei Monomere (a3) zu verwenden, weil hierdurch das Eigenschaftsprofil der resultierenden Copolymerisate (A) in besonders vorteilhafter Weise sehr breit variiert und dem jeweiligen erfindungsgemäßen Verfahren ganz gezielt angepasst werden kann. Insbesondere können in dieser Weise in die Copolymerisate (A) weitere reaktive funktionelle Gruppen eingebaut werden, durch die die Copolymerisate (A) in die aus den erfindungsgemäßen Pulverslurries und Pulverlacke hergestellten Beschichtungen, Klebschichten und Dichtungen einvernetzt werden können.

Bevorzugt werden Monomere (a33) als Monomere (a3) eingesetzt. Ihre Mengen können breit variiert und den Erfordernissen des Einzelfalls hervorragend angepasst werden. Besonders bevorzugt werden sie in Mengen eingesetzt, dass Copolymerisate (A) einer Säurezahl von 100 bis 400, ganz besonders bevorzugt 100 bis 350 und insbesondere 100 bis 300 mg KOH/g resultieren.

Die Monomeren (a1) und (a2) sowie gegebenenfalls (a3) werden in Gegenwart mindestens eines radikalischen Initiators miteinander zu dem Copolymerisat (A) umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat oder tert.-Butylper-2-ethylhexanoat; Kalium-, Natrium- oder Ammoniumsperoxodisulfat; Azodinitrile wie Azobisisobutyronitrit; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a1) und (a2) sowie gegebenenfalls (a3) und des Initiators, bevorzugt 0,5 bis 50 Gew.-%, besonders bevorzugt 1 bis 20 Gew.-% und insbesondere 2 bis 15 Gew.-% beträgt.

Vorzugsweise beträgt das Gewichtsverhältnis von Initiator zu den Monomeren (a2) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuss eingesetzt wird.

Vorzugsweise wird die radikalische Copolymerisation in üblichen und bekannten Vorrichtungen, insbesondere Rührkesseln, Rohrreaktoren oder Taylorreaktoren, durchgeführt, wobei die Taylorreaktoren so ausgelegt werden, dass auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Die Copolymerisation wird in einem wässrigen Medium durchgeführt.

Das wässrige Medium enthält im wesentlichen Wasser. Hierbei kann das wässrige Medium in untergeordneten Mengen die nachstehend im Detail beschriebenen Zusatzstoffe und/oder organischen Lösemittel und/oder sonstige gelöste feste, flüssige oder gasförmige organische und/oder anorganische, nieder- und/oder hochmolekulare Stoffe enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wässrigen Charakter des wässrigen Mediums nicht aufhebt. Bei dem wässrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Di- und/oder Triethanolamin.

Die Copolymerisation wird in vorteilhafter Weise bei Temperaturen oberhalb der Raumtemperatur und unterhalb der niedrigsten Zersetzungstemperatur der jeweils verwendeten Monomeren (a1) und (a2) sowie gegebenenfalls (a3) durchgeführt, wobei bevorzugt ein Temperaturbereich von 10 bis 150°C, ganz besonders bevorzugt 70 bis 120°C und insbesondere 80 bis 110°C gewählt wird.

Bei Verwendung besonders leicht flüchtige Monomeren (a1) und (a2) sowie gegebenenfalls (a3) kann die Copolymerisation auch unter Druck, vorzugsweise unter 1,5 bis 3.000 bar, bevorzugt 5 bis 1.500 und insbesondere 10 bis 1.000 bar durchgeführt werden.

Hinsichtlich der Molekulargewichtsverteilung ist das Copolymerisat (A) keinerlei Beschränkungen unterworfen. Vorteilhafterweise wird aber die Copolymerisation so geführt, dass eine Molekulargewichtsverteilung Mw/Mn gemessen mit Gelpermeationschromatographie unter Verwendung von Polystyrol als Standard von ≤ 4, vorzugsweise sonders bevorzugt ≤ 2 und insbesondere ≤ 1,5 sowie in einzelnen Fällen auch ≤ 1,3 resultiert. Die Molekulargewichte der Copolymerisate (A) sind durch die Wahl des Verhältnisses von Monomer (a1) und (a2) sowie gegebenenfalls (a3) zu radikalischem Initiator in weiten Grenzen steuerbar. Dabei bestimmt insbesondere der Gehalt an Monomer (a2) das Molekulargewicht, und zwar derart, dass je größer der Anteil an Monomer (a2) ist, desto geringer ist das erhaltene Molekulargewicht.

Das durch die Copolymerisation resultierende Copolymerisat (A) fällt als Gemisch mit dem wässrigen Medium in der Regel in der Form einer Dispersion (A) an. Es kann in dieser Form direkt als Emulgator (A) eingesetzt oder auch als Feststoff (A) isoliert und dann dem erfindungsgemäßen Verfahren und der erfindungsgemäßen Verwendung zugeführt werden.

Bei dem erfindungsgemäßen Verfahren wird der Emulgator (A) vorzugsweise über die wässrigen Medien (C) in die wässrigen Emulsionen flüssiger Partikel (D) und letztlich in die Suspensionen dimensionsstabiler Partikel (D) eingetragen.

In einer Ausführungsform des erfindungsgemäßen Verfahrens, die bei der Herstellung von pigmentierten erfindungsgemäßen Pulverslurries angewandt wird, wird der Emulgator (A) über mindestens eine Pigmentpaste oder Pigmentpräparation in die wässrigen Medien (C) eingetragen. Oder aber die betreffenden Pigmentpasten oder Pigmentpräparationen bilden die wässrigen Medien (C).

Die Menge des erfindungsgemäß zu verwendenden Emulgators (A) in den wässrigen Medien (C) kann stark variieren und richtet sich nach den Erfordernissen des Einzelfalls, insbesondere nach dem Festkörpergehalt der Emulsionen der flüssigen Partikel (D). Vorzugsweise enthält das wässrige Medium (C), jeweils bezogen auf (C), den Emulgator (A) in einer Menge von 0,01 bis 5 und insbesondere 0,1 bis 2,5 Gew.-% und das Verdickungsmittel (a2) in einer Menge von 0,02 bis 10 und insbesondere 0,1 bis 5 Gew.-%.

Bei dem erfindungsgemäßen Verfahren kann neben dem erfindungsgemäß zu verwendenden Emulgator (A) noch mindestens ein, insbesondere ein Verdickungsmittel (E) eingesetzt werden. Es ist indes ein besonderer Vorteil des erfindungsgemäßen Verfahrens und der erfindungsgemäßen Verwendung, dass die erfindungsgemäßen Pulverslurries auch ohne die Verwendung eines Verdickungsmittels (E) hergestellt werden können.

Sofern verwendet, wird das Verdickungsmittel (E) vorzugsweise in einer Menge 0,01 bis 2, vorzugsweise 0,1 bis 1 und insbesondere 0,3 bis 0,8 Gew.-%, jeweils bezogen auf dem Festkörpergehalt der nachstehend beschriebenen wässrigen Emulsionen der Partikel (D), eingesetzt.

Bevorzugt werden Verdickungsmittel (E) auf der Basis mindestens eines Säuregruppen enthaltenden (Meth)Acrylat(co)polymerisats (E), insbesondere eines (Meth)Acrylatcopolymerisats (E), verwendet. Dabei ist der Begriff »(Meth)Acrylat« im üblichen und bekannten Sinne als Kurzform für »Acrylat und/oder Methacrylat« aufzufassen.

Vorzugsweise werden die Säuregruppen aus der Gruppe, bestehend aus Carboxylgruppen, Sulfonsäuregruppen, Phosphonsäuregruppen, Phosphatestergruppen und Schwefelsäureestergruppen, insbesondere Carboxylgruppen, ausgewählt.

Vorzugsweise werden die (Meth)Acrylat(co)polymerisate (E) aus der Gruppe, bestehend aus Homopolymerisaten (E1) der Acrylsäure oder der Methacrylsäure, Copolymerisaten (E2) der Acrylsäure mit Methacrylsäure und Copolymerisaten (E3) von (Meth)Acrylsäure mit mindestens einem weiteren hiervon verschiedenen, olefinisch ungesättigten Monomeren, ausgewählt.

Bevorzugt werden die Copolymerisate (E3) verwendet.

Besonders bevorzugt werden die Copolymerisate (E3) aus der Gruppe, bestehend aus Methacrylatcopolymerisaten (E3) auf der Basis von (C₁-C₆)-Alkyl(meth)acrylat und (Meth)Acrylsäure, ausgewählt.

Insbesondere werden die Methacrylatcopolymerisate (E3) in der Form einer sauren, niedrigviskosen Emulsion verwendet, wie sie beispielsweise in der deutschen Patentanmeldung DE 100 43 405 C1, Spalte 11, Absatz [0075], beschrieben wird. Die Emulsionen (E3) sind handelsübliche Produkte und werden beispielsweise von der Firma Ciba Specialty Chemicals unter der Marke Viscalex® HV30 oder LO30 vertrieben.

Die bei dem erfindungsgemäßen Verfahren eingesetzten Ausgangsprodukte, d. h. die Bestandteile der erfindungsgemäßen Pulverslurries werden im Hinblick auf die gewünschte Zusammensetzung und den Mechanismus der Härtung der erfindungsgemäßen Pulverslurries ausgewählt.

Die erfindungsgemäßen Pulverslurries können physikalisch härtend sein.

Im Rahmen der vorliegenden Erfindung bedeutet der Begriff ,,physikalische Härtung,, die Härtung einer Schicht aus Partikeln der erfindungsgemäßen Pulverslurry durch Verfilmung, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Die erfindungsgemäßen Pulverslurries können thermisch härtbar sein. Hierbei können sie selbst vernetzend oder fremd vernetzend sein.

Im Rahmen der vorliegenden Erfindung bezeichnet der Begriff ,,selbst vernetzend,, die Eigenschaft eines Bindemittels mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind. Als fremd vernetzend werden dagegen solche Beschichtungsstoffe, bezeichnet, worin die eine Art der komplementären reaktiven funktionellen Gruppen in dem Bindemittel und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998. »Härtung«, Seiten 274 bis 276, insbesondere Seite 275, unten, verwiesen.

Die erfindungsgemäßen Pulverslurries können mit aktinischer Strahlung härtbar sein.

Hierbei erfolgt die Härtung über Gruppen, die Bindungen enthalten, die mit aktinischer Strahlung aktivierbar sind. Im Rahmen der vorliegenden Erfindung ist unter aktinischer Strahlung elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung wie Elektronenstrahlung, Protonenstrahlung, Neutronenstrahlung, Alphastrahlung oder Betastrahlung, insbesondere Elektronenstrahlung, zu verstehen.

Die erfindungsgemäßen Pulverslurries können thermisch und mit aktinischer Strahlung härtbar sein.

Werden die thermische und die Härtung mit aktinischem Licht bei einer Pulverslurry gemeinsam angewandt, spricht man auch von ,,Dual Cure,, und ,,Dual-Cure-Pulverslurry,, und "Dual-Cure-Pulverlack".

Die erfindungsgemäßen Pulverslurries sind vorzugsweise Einkomponenten(1K)-Systeme.

Im Rahmen der vorliegenden Erfindung sind unter Einkomponenten(1K)-Systemen thermisch oder thermisch und mit aktinischer Strahlung härtende Pulverslurries zu verstehen, bei denen das Bindemittel und das Vernetzungsmittel nebeneinander in den suspendierten Partikeln vorliegen. Voraussetzung hierfür ist, dass die beiden Bestandteile erst bei höheren Temperaturen und/oder bei Bestrahlen mit aktinischer Strahlung miteinander vernetzen.

Der Gehalt der erfindungsgemäßen Pulverslurries an dimensionsstabilen Partikeln (D) kann sehr breit variieren und richtet sich nach den Erfordernissen des Einzelfalls. Vorzugsweise liegt er bei 5,0 bis 60, bevorzugt 10 bis 55, besonders bevorzugt 15 bis 50, ganz besonders bevorzugt 20 bis 50 und insbesondere 25 bis 50 Gew.-%, jeweils bezogen auf die Gesamtmenge der erfindungsgemäßen Pulverslurry.

Ebenso kann die mittlere Teilchengröße der dimensionsstabilen Partikel (D) der erfindungsgemäßen Pulverslurries breit variieren. Vorzugsweise liegt sie zwischen 0,1 und 100, bevorzugt 0,2 und 80, besonders bevorzugt 0,3 und 60, ganz besonders bevorzugt 0,4 und 40 und insbesondere 0.5 bis 20 µm. Für ganz besonders anspruchsvolle Verwendungszwecke wie die Kraftfahrzeugerstlackierung sind Partikelgrößen von 1 bis 10 µm von ganz besonderem Vorteil. Vorzugsweise wird die mittlere Teilchengröße nach der Laserbeugungsmethode ermittelt. Bei mittleren Teilchengröße < 1 µm wird vorzugsweise die Photonenkorrelationsspektroskopie angewandt.

Auch die Größe der dimensionsstabilen Partikel (D) der Pulverlacke kann breit variieren. Vorzugsweise liegt sie zwischen 5 und 500, bevorzugt zwischen 5 und 400, besonders bevorzugt zwischen 5 und 300, ganz besonders bevorzugt 10 und 200 insbesondere 10 und 100 µm. Die mittlere Teilchengröße liegt vorzugsweise bei 10 bis 300, bevorzugt 10 bis 200. besonders bevorzugt 10 bis 150, ganz besonders bevorzugt 10 bis 100 und insbesondere 10 bis 50 µm. Dabei kann die Teilchengrößenverteilung eng oder breit sein. In den meisten Fällen ist eine enge Teilchengrößenverteilung, wie sie in den Patentanmeldungen und Literaturstellen EP 0 687 714 A 1, DE 42 04 266 A 1, DE 40 38 681 A 1, P. G. de Lange und P. Selier, »Komgrößenverteilung und Eigenschaften von elektrostatischen Spritzpulvern (1) - Fraktionierung des Pulvers und Charakterisierung der Fraktionen«, Farbe und Lack, 79. Jahrgang, Nr. 5, 1973, Seiten 403 bis 412, P. G. de Lange und P. Selier, »Korngrößenverteilung und Eigenschaften von elektrostatischen Spritzpulvern (2) - Verhalten der Pulverfraktionen beim Spritzen und nach dem Einbrennen«, Farbe und Lack, 79. Jahrgang, Nr. 6, 1973, Seiten 509 bis 517, und EP 0 536 791 A 1 beschrieben werden, von Vorteil. Vorzugsweise wird auch hier die mittlere Teilchengröße nach der Laserbeugungsmethode ermittelt.

Im Rahmen der vorliegenden Erfindung bedeutet ,,dimensionsstabil,,, dass die Partikel (D) unter den üblichen und bekannten Bedingungen der Lagerung und der Anwendung von Pulverlacksuspensionen, wenn überhaupt, nur geringfügig agglomerieren und/oder in kleinere Teilchen zerfallen, sondern auch unter dem Einfluss von Scherkräften im wesentlichen ihre ursprünglichen Form bewahren. Dabei können die Partikel (D) hochviskos und/oder fest sein. Vorzugsweise sind die dimensionsstabilen Partikel (D) fest.

Die erfindungsgemäßen Pulverslurries sind vorzugsweise frei von flüchtigen organischen Verbindungen (Volatile Organic Compounds, VOC), insbesondere von organischen Lösemitteln (Cosolventien). Im Rahmen der vorliegenden Erfindung bedeutet dies, dass sie einen Restgehalt an VOC von < 1 Gew.-%, bevorzugt < 0,5 Gew.-% und besonders bevorzugt < 0,2 Gew.-% haben. Erfindungsgemäß ist es von ganz besonderem Vorteil, wenn der Restgehalt unterhalb der gaschromatographischen Nachweisgrenze liegt.

Das erfindungsgemäße Verfahren geht aus von der Herstellung mindestens einer flüssigen Komponente (B), die mindestens ein flüssiges Ausgangsprodukt bzw. mindestens einen flüssigen oder verflüssigten Bestandteil der erfindungsgemäßen Pulverslurries enthält. Dabei kann der Bestandteil bei Raumtemperatur bereits flüssig sein oder erst bei höheren Temperaturen schmelzen. Wesentlich ist, dass das Ausgangsprodukt bei den angewandten Prozesstemperaturen flüssig ist. Vorzugsweise ist der Bestandteil bei Raumtemperatur fest. Insbesondere handelt es sich bei diesem Ausgangsprodukt um mindestens ein Bindemittel.

Die Herstellung der flüssigen Komponenten (B) bietet keine methodischen Besonderheiten, sondern erfolgt mit Hilfe der üblichen und bekannten Verfahren und Vorrichtungen zur Herstellung von Schmelzen, insbesondere von Polymerschmelzen, wie Extruder, Rührkessel, Taylorreaktoren, Rohrreaktoren, Schlaufenreaktoren etc.

Die Prozesstemperaturen werden so gewählt, dass die Zersetzungstemperatur des Ausgangsprodukts oder Bestandteils, das oder der sich am leichtesten zersetzt, nicht überschritten wird. Vorzugsweise werden Prozesstemperaturen von 50 bis 250, bevorzugt 60 bis 220, besonders bevorzugt 70 bis 200, ganz besonders bevorzugt 80 bis 190 und insbesondere 90 bis 180°C angewandt.

Im Rahmen des erfindungsgemäßen Verfahrens wird die flüssige Komponente (B) oder werden die flüssigen Komponenten (B) anschließend geeigneten Mischaggregaten zugeführt, worin sie in einem wässrigen Medium (C) emulgiert werden. Vorzugsweise enthält das wässrige Medium (C) den vorstehend beschriebenen, erfindungsgemäß zu verwendenden Emulgator (A).

In einer weiteren Variante des erfindungsgemäßen Verfahrens werden mindestens zwei flüssigen Komponenten (B), die jeweils mindestens ein flüssiges Ausgangsprodukt bzw. mindestens einen flüssigen oder verflüssigten Bestandteil enthalten, zunächst einem üblichen und bekannten statischen Mischer zugeführt und homogenisiert. Beispiele geeigneter Mischer sind solche vom Typ Sulzer, die von der Firma Sulzer Chemtech GmbH vertrieben werden. Die vereinigten Schmelzen (B) werden anschließend dem Mischaggregat zugeführt.

Vorzugsweise haben die flüssigen Komponenten (B) jeweils so hohe Prozesstemperaturen, dass bei dem Mischungsvorgang nicht die eine flüssige Komponente (B) durch die andere soweit abgekühlt wird, dass sich feste Agglomerate bilden. Andererseits dürfen die Prozesstemperaturen der flüssigen Komponenten (B) nicht so hoch gewählt werden, dass die eine flüssige Komponente (B) durch die andere soweit erhitzt wird, dass es beispielsweise zu Zersetzungsreaktionen kommt. Besonders bevorzugt haben die flüssigen Komponenten (B) bei dem Mischungsvorgang dieselbe oder in etwa dieselbe Prozesstemperatur.

Mischaggregate, die für die Emulgierung von flüssigen Komponenten (B) in den wässerigen Medien (C) geeignet sind, sind üblich und bekannt. Beispiele geeigneter Mischaggregate sind Inline-Dissolver mit einem Rotor-Stator-Aufbau, vorzugsweise Zahnkranz-Dispergieraggregate insbesondere mit mindestens einer zylindrischen Anordnung mindestens zweier auf Haltern sitzender, sich umschließender, relativ zueinander gegenläufig rotierbarer Zerkleinerungsorgankränze (Stator und Rotor) auf, wobei der sich durch die Relativbewegung zwischen dem Stator und Rotor ergebende Arbeitspalt Wände aufweist, die nicht-parallel zueinander verlaufen. Dabei ist es von Vorteil, wenn der Rotor im Sinne eines sich öffnenden Arbeitspaltes rotiert. Beispiele gut geeigneter Zahnkranz-Dispergieraggregate werden in der Patentschrift EP 0 648 537 A 1 im Detail beschrieben. Sie werden unter dem Handelsnamen "K-Generatoren" von der Firma Kinematica AG, Luzern, Schweiz, vertrieben.

Es ist ein besonderer Vorteil des erfindungsgemäßen Verfahrens, dass die Emulgierung bei vergleichsweise niedrigen Temperaturen durchgeführt werden kann. Vorzugsweise wird sie bei Temperaturen von 100 bis 200, bevorzugt 100 bis 160 und insbesondere 100 bis 130°C durchgeführt.

Nach der Emulgierung werden die resultierenden emulgierten flüssigen Partikel (D) abgekühlt, wodurch die suspendierten dimensionsstabilen Partikel (D) resultieren.

Für die Herstellung der erfindungsgemäßen Pulverslurries wird vorzugsweise mindestens ein Bindemittel aufgeschmolzen und im flüssigen Zustand einem Zahnkranz-Dispergieraggregat zugeführt, worin es in dem wässrigen Medium (C) emulgiert wird.

Die Temperatur der Schmelze(n) (B) kann sehr breit variieren und richtet sich nach der stofflichen Zusammensetzung der Bindemittel. Im Allgemeinen werden Temperaturen angewandt, bei denen die Bindemittel nicht thermisch geschädigt werden. Vorzugsweise werden Temperaturen von 110 bis 200, bevorzugt 115 bis 180 und insbesondere 120 bis 160°C angewandt. Dabei ist darauf zu achten, dass die Bindemittelschmelzen (B) im Verlauf des erfindungsgemäßen Verfahrens wieder möglichst rasch abgekühlt werden, um die Gefahr der thermischen Schädigung möglichst gering zu halten. Der Fachmann kann daher das für den jeweiligen Einzelfall geeignete Temperatur-Zeit-Fenster aufgrund seines allgemeinen Fachwissens gegebenenfalls unter Zuhilfenahme orientierender Versuche in einfacher Weise bestimmen.

Wird oder werden zusätzlich mindestens ein Vernetzungsmittel und/oder mindestens ein Zusatzstoff zur Herstellung der erfindungsgemäßen Pulverslurries angewandt, werden alle Ausgangsprodukte oder Bestandteile getrennt voneinander verflüssigt oder aufgeschmolzen und dem Zahnkranz-Dispergieraggregat zugeführt, worin sie in dem wässrigen Medium (C) emulgiert werden. Bestandteile, die nicht aufgeschmolzen werden können, wie beispielsweise die nachstehend beschriebenen Pigmente, werden in der Form von Suspensionen verflüssigt eingesetzt.

Hinsichtlich des hierbei angewandten Temperatur-Zeit-Fensters gilt das vorstehend Gesagte sinngemäß, wobei als weitere Rahmenbedingung hinzutritt, dass die vorzeitige Reaktion der Bindemittel mit den Vernetzungsrmitteln vermieden werden muss.

Nach dem Dispergieren wird die Emulsion rasch abgekühlt, so dass sich eine Suspension bildet. Hierbei werden vorzugsweise die in der DE 196 52 813 A 1, Spalte 8, Zeilen 9 bis 17, beschriebenen Methoden angewandt.

Durch die Abkühlung werden die flüssigen Partikel (D) dimensionsstabil, wodurch eine Suspension resultiert. Gegebenenfalls wird die Suspension oder die erfindungsgemäße Pulverslurry noch in einer geeigneten Vorrichtung, wie eine Rührwerksmühle oder eine Labormühle, nass vermahlen und vor ihrer Applikationen filtriert. Hierfür werden die üblichen und bekannten Filtrationsvorrichtungen und Filter verwendet, wie sie auch für die Filtration von bekannten Pulverslurries in Betracht kommen. Die Maschenweite der Filter kann breit variieren und richtet sich in erster Linie nach der Teilchengröße und der Teilchengrößenverteilung der Partikel (D) der Suspension. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Zur Herstellung der Pulverlacke werden die suspendierten dimensionsstabilen Partikel (D) isoliert. Methodisch gesehen weist die Isolierung keine Besonderheiten auf sondern erfolgt mit Hilfe der üblichen und bekannten Vorrichtungen und Verfahren, wie sie beispielsweise bei der Filtration, der Sprühtrocknung oder der Gefriertrocknung angewandt werden. Gut geeignet sind Trocknungsverfahren, bei denen Rotationszerstäuber, Druckzerstäuber oder pneumatische Zerstäuber angewandt werden, wie sie in der internationalen Patentanmeldung WO 99/01499, Seite 5, Seite 24, bis Seite 7, Zeile 27, und Seite 27, Zeile 16, bis Seite 28, Zeile 19, beschrieben werden.

Im Falle der Herstellung erfindungsgemäßer Pulverslurries die mit aktinischer Strahlung vernetzt werden können, ist es von Vorteil, unter Ausschluss von aktinischer Strahlung zu arbeiten.

Die emulgierten flüssigen und die suspendierten dimensionsstabilen Partikel (D) enthalten mindestens ein Bindemittel oder bestehen aus diesem.

Beispiele geeigneter Bindemittel und die Mengen, in denen sie angewandt werden, sind aus der deutschen Patentanmeldung DE 101 26 651 A1, Seite 9, Absatz [0089], bis Seite 14, Absatz [0127], bekannt.

Die thermisch oder thermisch und mit aktinischer Strahlung härtbaren, fremd vernetzenden erfindungsgemäßen Pulverslurries bzw. die ihrer Herstellung dienenden Partikel (D) enthalten mindestens ein Vernetzungsmittel, das die zu den reaktiven funktionellen Gruppen der Bindemittel komplementären reaktiven funktionellen Gruppen enthält. Der Fachmann kann daher die für den Einzelfall geeigneten Vernetzungsmittel leicht auswählen.

Beispiele geeigneter Vernetzungsmittel und die Mengen, in denen sie angewandt werden, sind ebenfalls aus der deutschen Patentanmeldung DE 101 26 651 A1, Seite 14, Absätze [0129] und [0130], bekannt.

Je nach Verwendungszweck der erfindungsgemäßen Pulverslurries können sie farb- und/oder effektgebende, fluoreszierende, elektrisch leitfähige und/oder magnetisch abschirmende Pigmente, Metallpulver, organische und anorganische, transparente oder opake Füllstoffe und/oder Nanopartikel (nachstehend zusammenfassend "Pigmente" genannt) enthalten.

Die Pigmente werden verwendet, wenn die erfindungsgemäßen Pulverslurries als pigmentierte Beschichtungsstoffe, Klebstoffe und Dichtungsmassen eingesetzt werden sollen. Vorzugsweise werden sie bei dem erfindungsgemäßen Verfahren in der Form von Pigmentpasten oder Pigmentpräparationen (vgl. Römpp Lexikon Lacke und Druckfarben, Georg Thieme Verlag, Stuttgart, New York, 1998, »Pigmentpräparationen«, Seite 452) in die wässrigen Medien (C) eindispergiert, oder die Pigmentpasten oder Pigmentpräparationen bilden, wie vorstehend bereits erwähnt, die wässrigen Medien (C). Bevorzugt enthalten sie die vorstehend beschriebenen, erfindungsgemäß zu verwendenden Mischungen (A).

In einer Ausführungsform des erfindungsgemäßen Verfahrens enthalten die emulgierten oder suspendierten Partikel (D) mindestens ein Pigment; d.h., die Gesamtmenge der eingesetzten Pigmente befindet sich in und/oder auf den Partikeln (D).

In einer weiteren Ausführungsform des erfindungsgemäßen Verfahrens enthalten die emulgierten oder suspendierten Partikel (D) kein Pigment; d.h. alle Pigmente liegen als separate feste Phase vor. Für deren Teilchengröße gilt das vorstehend Gesagte sinngemäß. -

In noch einer weiteren Ausführungsform des erfindungsgemäßen Verfahrens enthalten die emulgierten oder suspendierten Partikel (D) im vorstehend geschilderten Sinne einen Teil der eingesetzten Pigmente, wogegen der andere Teil der Pigmente als separate feste Phase vorliegt. Hierbei kann es sich bei dem in den Partikeln (D) vorliegenden Anteil um die Hauptmenge, d.h. um mehr als 50 Gew.-% der eingesetzten Pigmente handeln. Es können sich indes auch weniger als 50 Gew.-% in und/oder auf den Partikeln (D) befinden. Hinsichtlich der Teilchengrößen gilt das vorstehend Gesagte auch hier sinngemäß.

Welcher Variante des erfindungsgemäßen Verfahrens bei der Herstellung der pigmentierten erfindungsgemäßen Pulverslurries der Vorzug gegeben wird, richtet sich insbesondere nach der Natur der Pigmente und ihrer Funktionen. Dient das Verfahren der Herstellung der pigmentierten Pulverlacke, ist die Variante, bei der alle oder der überwiegende Anteil der Pigmente in und/oder auf den emulgierten und suspendierten Partikeln (D) vorliegt, von Vorteil und wird deshalb bevorzugt angewandt.

Beispiele geeigneter Pigmente sind aus der deutschen Patentanmeldung DE 101 26 651 A1, Seite 14, Absätze [0137] bis [0150], bekannt.

Pigmentpasten oder Pigmentpräparationen können bei Verwendung der vorstehend beschriebenen, erfindungsgemäß zu verwendenden Mischungen (A) einen besonders hohen Gehalt von Nanopartikeln haben, was ein weiterer wertvoller Vorteil der erfindungsgemäß zu verwendenden Mischungen (A) ist.

Die erfindungsgemäßen Pulverslurries können zusätzlich zu den vorstehend beschriebenen Pigmenten oder anstelle von diesen molekulardispers verteilte organische Farbstoffe enthalten. Diese molekulardispers verteilten Farbstoffe können entweder in den emulgierten oder suspendierten Partikeln (D) oder in der kontinuierlichen Phase, d. h. dem wässrigen Medium (C), vorhanden sein. Sie können indes auch in den Partikeln (D) oder in der konlinuierlichen Phase (C) vorliegen. Hierbei kann es sich bei dem in den Partikeln (D) vorliegenden Anteil um die Hauptmenge, d.h. um mehr als 50% der eingesetzten organischen Farbstoffe, handeln. Es können sich indes auch weniger als 50% in den Partikeln (D) befinden. Die Verteilung der organischen Farbstoffe zwischen den Phasen kann dem thermodynamischen Gleichgewicht entsprechen, das aus der Löslichkeit der organischen Farbstoffe in den Phasen resultiert. Die Verteilung kann aber auch weit von dem thermodynamischen Gleichgewicht entfernt liegen. Dienen die emulgierten und suspendierten Partikel (D) der Herstellung der Pulverlacke, sind die Farbstoffe nur in den Partikeln (D) enthalten.

Geeignet sind alle organischen Farbstoffe, die in den erfindungsgemäßen Pulverslurries im vorstehend geschilderten Sinne löslich sind. Gut geeignet sind lichtechte organische Farbstoffe. Besonders gut geeignet sind lichtechte organische Farbstoffe mit einer geringen oder nicht vorhandenen Neigung zur Migration aus den aus den erfindungsgemäßen Pulverslurries hergestellten Beschichtungen, Klebschichten und Dichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der erfindungsgemäßen Pulverslurries an den molekulardispers verteilten organischen Farbstoffen kann außerordentlich breit variieren und richtet sich in erster Linie nach der Farbe und dem Buntton, der eingestellt werden soll, sowie nach der Menge der gegebenenfalls vorhandenen Pigmente.

Die erfindungsgemäßen Pulverslurries können Zusatzstoffe enthalten.

Vorzugsweise werden die Zusatzstoffe, die sowohl in den pigmentierten als auch in den nicht pigmentierten Pulverslurries enthalten sein können, aus der Gruppe, bestehend aus UV-Absorbem, Antioxidantien, Lichtschutzmitteln, Radikalfängern, Entlüftungsmitteln, zusätzlichen, von den Emulgatoren (A) verschiedenen Emulgatoren, Netzmitteln, Slipadditiven, Polymerisationsinhibitoren, Katalysatoren für die Vernetzung, thermolabilen radikalischen Initiatoren, Photoinitiatoren, thermisch härtbaren Reaktiverdünnern, mit aktinischer Strahlung härtbaren Reaktiwerdünnern, Haftvermittlern, Verlaufmitteln, von den Verdickungsmitteln (E) verschiedenen rheologiesteuemden Additiven, filmbildenden Hilfsmitteln, Flammschutzmitteln, Korrosionsinhibitoren, Rieselhilfen, Wachsen, Sikkativen, Bioziden und/oder Mattierungsmitteln, ausgewählt.

Beispiele geeigneter Zusatzstoffe sind aus der deutschen Patentanmeldung DE 101 26 651 A1; Seite 16, Absatz [0156], bis Seite 17, Absatz [0172], bekannt.

Für das erfindungsgemäße Verfahren können die vorstehend beschriebenen Zusatzstoffe sowohl in den vorstehend beschriebenen wässrigen Medien (C) oder in den vorstehend beschriebenen Schmelzen (B) eingesetzt werden. Maßgebend ist vor allem, ob sie ihrer üblichen und bekannten Funktionen nach besser in den emulgierten oder suspendierten Partikeln (D) oder besser in der kontinuierlichen, d. h. wässrigen, Phase (C) vorliegen sollten. So ist es beispielsweise für die erfindungsgemäßen Pulverslurries von Vorteil, wenn die zusätzlichen Verdickungsmittel und Emulgatoren in dem wässrigen Medium (C), d.h. im Wesentlichen außerhalb der Partikel (D), vorliegen. Dient das Verfahren der Herstellung der Pulverlacke, liegen die Zusatzstoffe überwiegend oder ganz in den Schmelzen (B) und den hieraus hergestellten emulgierten und suspendierten Partikeln (D) vor. Der Fachmann kann daher die für den jeweiligen Einzelfall optimale Verfahrensvariante anhand seines allgemeinen Fachwissens gegebenenfalls unter Zuhilfenahme einfacher Vorversuche leicht ermitteln.

Die erfindungsgemäß zu verwendenden Copolymerisate (A) sind hervorragende Emulgatoren und können mit Vorteil allen Verwendungszwecken zugeführt werden, bei denen der Einsatz von Emulgatoren notwendig ist. Insbesondere sind sie hervorragend für das erfindungsgemäße Verfahren geeignet.

Die erfindungsgemäßen Pulverslurries weisen eine hervorragende Stabilität und Lagerfähigkeit und ein hervorragendes Applikationsverhalten auf. Insbesondere weisen sie eine hervorragende Scherstabilität bei der ESTA-Applikation auf, so dass die problemlos in vorhandenen Lackieranlagen für Flüssiglacke appliziert werden können.

Die Pulverlacke haben eine hervorragende Fluidität, Lagerfähigkeit und Transportfähigkeit und zeigen auch bei längerer Lagerung kein Verbacken. Das Applikationsverhalten ist hervorragend.

Die erfindungsgemäßen Pulverslurries eignen sich hervorragend als Beschichtungsstoffe, Klebstoffe und Dichtungsmassen oder zu deren Herstellung.

Die erfindungsgemäßen Beschichtungsstoffe sind hervorragend für die Herstellung von ein-oder mehrschichtigen, farb- und/oder effektgebenden, elektrisch leitfähigen, magnetisch abschirmenden oder fluoreszierenden Beschichtungen, wie Füllerlackierungen, Basislackierungen, Unidecklackierungen oder Kombinationseffektschichten, oder von ein-oder mehrschichtigen Klarlackierungen geeignet.

Die erfindungsgemäßen Klebstoffe sind hervorragend für die Herstellung von Klebschichten und die erfindungsgemäßen Dichtungsmassen hervorragend für die Herstellung von. Dichtungen geeignet.

Ganz besondere Vorteile resultieren bei der Verwendung der nicht pigmentierten efindungsgemäßen Pulverslurries als Klarlacke für die Herstellung von ein-oder mehrschichtigen Klarlackierungen. Insbesondere werden die erfindungsgemäßen Klarlacke zur Herstellung von farb- und/oder effektgebenden Mehrschichtlackierungen nach dem Nass-in-nass-Verfahren verwendet, bei dem ein Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet. Anschließend werden die beiden Schichten gemeinsam gehärtet.

Ganz besondere Vorteile resultieren des Weiteren bei der Verwendung der pigmentierten erfindungsgemäßen Pulverslurries für die Herstellung ein- oder mehrschichtiger farb- und/oder effektgebender Lackierungen oder von Kombinationseffektschichten. Unter einer Kombinationseffektschicht ist eine Lackierung zu verstehen, die in einer farb- und/oder effektgebenden Lackierung mindestens zwei Funktionen erfüllt. Funktionen dieser Art sind insbesondere der Schutz vor Korrosion, die Haftvermittlung, die Absorption mechanischer Energie und die Farb- und/oder Effektgebung. Vorzugsweise dient die Kombinationseffektschicht der Absorption mechanischer Energie sowie der Farb- und/oder Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/oder haftvermittelnde Wirkung.

Die pigmentierten Beschichtungen oder Lackierungen können ebenfalls mit Hilfe von Nass-in-nass-Verfahren hergestellt werden. Beispielsweise können die pigmentierten erfindungsgemäßen Pulverslurries auf nicht oder nicht vollständig gehärtete Elektrotauchlackschichten appliziert werden, wonach man die übereinander liegenden Schichten gemeinsam härtet.

Der ganz besondere Vorteil der erfindungsgemäßen Pulverslurries liegt darin, dass mit ihrer Hilfe Mehrschichtlackierungen aller Art erzeugt werden können, die völlig oder überwiegend auf den erfindungsgemäßen Pulverslurries basieren.

Methodisch weist die Applikation der erfindungsgemäßen Pulverslurries keine Besonderheiten auf, sondern kann durch alle üblichen Applikationsmethoden, wie z.B. Spritzen, Rakeln, Streichen, Gießen, Tauchen, Träufeln oder Walzen, erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Insbesondere wird der elektrostatische Sprühauftrag (ESTA) mit Hochrotationsglocken verwendet. Auch hier empfiehlt es sich unter Ausschluss von aktinischer Strahlung zu arbeiten, um eine vorzeitige Vernetzung der erfindungsgemäßen Dual-Cure-Beschichtungsstoffe, -Klebstoffe und -Dichtungsmassen zu vermeiden.

Auch die Applikation der Pulverlacke weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke, für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Als Substrate kommen all die in Betracht, die in ihrer Oberfläche und ihrer Substanz durch die Anwendung von Hitze und/oder aktinischer Strahlung bei der Härtung der hierauf befindlichen Schichten nicht geschädigt werden. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Demnach sind die erfindungsgemäßen Beschichtungsstoffe, Klebstoffe und Dichtungsmassen hervorragend für die Beschichtung, das Verkleben und das Abdichten von
- mit Muskelkraft, Heißluft oder Wind betriebenen Fortbewegungsmitteln zu Lande, zu Wasser oder zur Luft, wie Fahrräder, Draisinen, Ruderboote, Segelboote, Heißluftballons, Gasballons oder Segelflugzeuge, sowie Teilen hiervon
- mit Motorkraft betriebenen Fortbewegungsmitteln zu Lande, zu Wasser oder zur Luft, wie Motorräder, Nutzfahrzeuge oder Kraftfahrzeuge, insbesondere PKW, Über- oder Unterwasserschiffe oder Flugzeuge, sowie Teilen hiervon,
- stationären Schwimmkörpern, wie Bojen oder Teilen von Hafenanlagen
- Bauwerken im Innen- und Außenbereich,
- Türen, Fenstern und Möbeln und
- Glashohlkörper,
- sowie im Rahmen der industriellen Lackierung für die Beschichtung, das Verkleben und das Abdichten von
- Kleinteilen, wie Muttern, Schrauben, Radkappen oder Felgen,
- Behältern, wie Coils, Container oder Emballagen,
- elektrotechnischen Bauteilen, wie Motorwicklungen oder Transformatorwicklungen,
- optischen Bauteilen,
- mechanischen Bauteilen und
- weißer Ware, wie Haushaltsgeräte, Heizkessel und Radiatoren,
geeignet. Insbesondere sind sie für die Beschichtung von Kraftfahrzeugkarosserien, speziell Karosserien von PKW der Oberklasse, geeignet.

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht. Im Falle von nicht funktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Pulverslurries weist keine methodischen Besonderheiten auf, sondern erfolgt nach den üblichen und bekannten thermischen Methoden, wie Erhitzen in einem Umluftofen oder Bestrahlen mit IR-Lampen. Für die Härtung mit aktinischer Strahlung kommen Strahlenquellen wie Quecksilberhoch-oder -niederdruckdampflampen, welche gegebenenfalls mit Blei dotiert sind, um ein Strahlenfenster bis zu 405 nm zu öffnen, oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A 1, Spalte 10, Zeilen 31 bis 61, der deutschen Patentanmeldung DE 103 16 890 A1, Seite 17, Absätze [0128] bis [0130], oder in der internationalen Patentanmeldung WO 94/11123, Seite 2, Zeilen 35, bis Seite 3, Zeile 6, Seite 3, Zeilen 10 bis 15, und Seite 8, Zeilen 1 bis 14, beschrieben.

Die resultierenden erfindungsgemäßen Beschichtungen, insbesondere die erfindungsgemäßen ein- oder mehrschichtigen farb- und/oder effektgebenden Lackierungen, Kombinationseffektschichten und Klarlackierungen, sind einfach herzustellen und weisen hervorragende optische Eigenschaften und eine sehr hohe Licht-, Chemikalien-, Wasser-, Schwitzwasser- und Witterungsbeständigkeit auf. Insbesondere sind sie frei von Trübungen und Inhomogenitäten. Sie sind hart, flexibel und kratzfest. Sie weisen ein sehr gutes Reflow-Verhalten und eine hervorragende Zwischenschichthaftung und eine gute bis sehr gute Haftung zu üblichen und bekannten Autoreparaturlackierungen auf. Vor allem aber sind sie in ihrem Glanz und Haze sowie ihrem Verlauf den Beschichtungen des Standes der Technik überlegen.

Die erfindungsgemäßen Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die erfindungsgemäßen Dichtungen die Substrate auf Dauer ab, wobei sie eine hohe chemische und mechanische Stabilität auch bei extremen Temperaturen und/oder Temperaturschwankungen sogar i. V. m. der Einwirkung aggressiver Chemikalien aufweisen.

Ein weiterer Vorteil der erfindungsgemäßen Dual-Cure-Beschichtungsstoffe, -Klebstoffe und -Dichtungsmassen ist, dass sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen, Klebschichten und Dichtungen liefern, deren anwendungstechnisches Eigenschaftsprofil an das der Beschichtungen, Klebschichten und Dichtungen außerhalb der Schattenzonen zumindest heranreicht. Dadurch werden die in den Schattenzonen befindlichen erfindungsgemäßen Beschichtungen, Klebschichten und Dichtungen auch nicht mehr leicht durch mechanische und/oder chemische Einwirkung geschädigt, wie sie beispielsweise beim Einbau weiterer Bauteile von Kraftfahrzeugen in die beschichteten Karosserien eintreten kann.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich ganz besonders attraktiv macht.

### Beispiele

### Vergleichbeispiel 1

### Die Herstellung des Emulgators (A1)

In einem geeigneten Reaktionsgefäß, ausgerüstet mit drei Zulaufgefäßen, Rührer, Rückflusskühler und Ölheizung, wurden 1.839,5 Gewichtsteile deionisiertes Wasser vorgelegt und auf 90°C erhitzt. Anschließend wurden bei dieser Temperatur drei separate Zuläufe parallel und gleichmäßig zur Vorlage hinzudosiert. Der erste Zulauf bestand aus 403,5 Gewichtsteile Methylmethacrylat, 178,2 Gewichststeilen Acrylsäure, 13,4 Gewichtsteilen Isobutylmethacrylat, 224,7 Gewichtsteilen n-Butylmethacrylat, 165,4 Gewichtsteilen Hydroxyethylmethacrylat und 65,7 Gewichtsteilen 1,1-Diphenylethylen. Der zweite Zulauf bestand aus 173,5 Gewichtsteilen einer 25 Gew.%igen Ammoniaklösung in Wasser. Der dritte Zulauf bestand aus einer Lösung von 78,9 Gewichtsteilen Ammoniumperoxodisulfat in 183,8 Gewichtsteilen deionisiertem Wasser. Der erste und der zweite Zulauf wurden während 4 Stunden gleichmäßig zur Vorlage zudosiert. Der dritte Zulauf wurde während 4,5 Stunden gleichmäßig zudosiert. Nach der Beendigung der Zugabe wurde während 3 Stunden nachpolymerisiert. Dabei wurde die Temperatur der Reaktionsmischung langsam auf 40°C abgesenkt. Die resultierende Dispersion des Emulgators (A1) wies einen Festkörpergehalt von 34,3 Gew.-% (1 Stunde/130°C), einen pH-Wert von 5,3, eine berechnete Säurezahl von 132 mg KOH/g Festharz, eine berechnete Hydroxylzahl von 68 mg KOH/g Festharz und eine Oberflächenspannung von 40,7 mN/m auf.

### Herstellbeispiel 2

### Die Herstellung des Emulgators (A2)

Herstellbeispiel 1 wurde wiederholt, mit dem Unterschied, dass an Stelle von 65,7 Gewichtsteilen 1,1-Diphenylethylen 65,7 Gewichtsteile gamma-Terpinen verwendet wurden. Die resultierende Dispersion des Emulgators (A2) wies einen Festkörpergehalt von 34,5 Gew.-% (1 Stunde/130°C), eine Oberflächenspannung von 36,2 mN/m, eine berechnete Säurezahl von 132 mg KOH/g Festharz und eine berechnete Hydroxylzahl von 68 mg KOH/g Festharz auf.

### Herstellbeispiel 3

### Die Herstellung eines hydroxyfunktionellen Methacrylatcopolymerisats (Bindemittel)

In einem geeigneten Reaktionsgefäß wurden 42,15 Gewichtsteile Methylethylketon vorgelegt und auf 78°C erwärmt. Zu dieser Vorlage wurden bei 78°C während 6 Stunden und 45 Minuten über zwei getrennte Zuläufe zum einen eine Initiatorlösung aus 5,1 Gewichtsteilen tert.-Butylperethylhexanoat und 2,75 Gewichtsteilen Methylethylketon und zum anderen während 4 Stunden 50 Gewichtsteile einer Monomerenmischung aus 55 Gew.-% n-Butylmethacrylat, 40,5 Gew.-% Hydroxethylmethacrylat, 3,3 Gew.-% Isobutylmethacrylat und 1,2 Gew.-% Methacrylsäure gleichmäßig unter Rühren zudosiert. Mit dem Zulauf der Monomerenmischung wurde 15 Minuten nach dem Beginn des Zulaufs der Initiatorlösung begonnen. Die resultierende Reaktionsmischung wurde schrittweise auf 150°C erhitzt, und das Lösemittel wurde bei 20 mbar vollständig abdestilliert. Die resultierende heiße Schmelze des Bindemittel wurde aus dem Reaktionsgefäß abgelassen. Nach dem Abkühlen auf Raumtemperatur erhielt man einen farblosen Feststoff.

### Beispiel 1

### Die Herstellung der Pulverslurry 1

In einem ersten Behälter wurde eine Mischung (B1) aus, jeweils bezogen auf (B1), 95,33 Gew.-% des Bindemittels gemäß Herstellbeispiel 3 und 4,67 Gew.-% 2,5-Diethyloctandiol-1,5 vorgelegt. Der Inhalt des Behälters wurde auf 150°C erwärmt.

In einem zweiten Behälter wurde eine Mischung (B2) aus, jeweils bezogen auf (B2), 94,18 Gew.-% eines handelsüblichen, mit 3,5-Dimethylpyrazol blockierten Polyisocyanats auf der Basis von Hexamethylendiisocyanat, 1,02 Gew.-% eines Lichtschutzmittels (HALS, Tinuvin® 123 der Firma Ciba Specialty Chemicals) und 4,8 Gew.-% eines UV-Stabilisators (Triazin, Tinuvin® 400 der Firma Ciba Specialty Chemicals) vorgelegt. Der Inhalt des Behälters wurde auf 110°C erwärmt.

Bei den eingestellten Temperaturen resultierten Schmelzen (B1) und (B2), deren Viskosität eine weitere Bearbeitung, insbesondere eine Förderung, erlaubte.

Vor der Förderung der Schmelzen (B1) und (B2) durch die Anlage mit einem Zahnkranz-Dispergieraggregat ("K-Generator" der Firma Kinematica AG, Luzern, Schweiz) wurde die gesamte Anlage mit Dampf auf 100°C erwärmt. Hiernach wurden die beiden Schmelzen (B1) und (B2) über getrennte, beheizte Zuleitungen mit volumetrisch fördernden Pumpen in einen statischen Sulzer-Mischer dosiert. Über den Volumenstrom der Pumpen wurde ein stöchiometrisches Verhältnis von blockierten Isocyanatgruppen zu Hydroxylgruppen eingestellt. In dem statischen Mischer wurden die beiden Schmelzen (B1) und (B2) innerhalb sehr kurzer Zeit (etwa sechs Sekunden) molekulardispers gemischt. Die resultierende homogene Schmelze (B), die noch immer eine Temperatur oberhalb des Schmelzpunkts der Bestandteile aufwies, wurde über ein Injektorrohr in die Voremulgierzone des Zahnkranz-Dispergieraggregats gefördert.

Der Voremulgierzone wurde ein wässriges Medium (C) aus, jeweils bezogen auf (C), 97,74 Gew.-% deionisiertes Wasser, 0,61 Gew.% der Emulgatordispersion (A1) gemäß Herstellbeispiel 1, 0,68 Gew.-% Dimethylethanolamin und 0,97 Gew.-% eines handelsüblichen nicht-ionischen Tensids (Niotensid, Lutensol® AT50 der Firma BASF Aktiengesellschaft) mit einer volumetrisch fördernden Pumpe zudosiert. Das wässrige Medium (C) war vor der Dosierung in einem druckbeständigen Behälter auf die Prozesstemperatur erwärmt worden.

Durch Energieeintrag mit einem ersten Rotor-Stator-System des Zahnkranz-Dispergieraggregats wurde eine Voremulsion erzeugt, in der das wässrige Medium (C) die kontinuierliche Phase bildete. Die Voremulsion wurde in einer weiteren Zone des Zahnkranz-Dispergieraggregats auf eine mittlere Teilchengröße zwischen 1 und 4 µm zerkleinert. Der Energieeintrag des Rotor-Stator-Systems wurde über die Spaltbreite des Arbeitsspalts zwischen Rotor und Stator, durch die Geometrie der Zähne des jeweiligen Rotors und Stators sowie die Drehzahl eingestellt. Die Drehzahl des Zahnkranz-Dispergieraggregats betrug im vorliegenden Falle 12.000 U/min; die Verweilzeit lag bei etwa sechs Sekunden.

Das Verfahren wurde so durchgeführt, dass die resultierende Emulsion aus, jeweils bezogen auf die Emulsion, 59 Gew.-% des wässrigen Mediums (C), 21,4 Gew.-% der Schmelze (B1) und 19,6 Gew.-% der Schmelze (B2) bestand.

Nach der Dispergierung wurde die Emulsion in einem nachgeschalteten Wärmetauscher rasch auf Temperaturen < 40°C abgekühlt. Die resultierende Pulverslurry 1 hatte einen Festkörpergehalt von 38,5 Gew.-%, bestimmt in einem Umluftofen während einer Stunde bei 125°C.

Die Pulverslurry 1 war absetzstabil. Sie wies hervorragende Transport- und Lagerungseigenschaften auf. Diese Vorteile konnten überraschenderweise bereits durch eine vergleichsweise geringe Menge an Emulgator erzielt werden.

Zur Applikation wurde sie über eine Kaskade aus einem Filterbeutel (Maschenweite 25 µm) und einer MicroKlean®-Kartusche (Abscheidegrenze 3 µm) filtriert. Sie konnte problemlos durch elektrostatischen Sprühauftrag (ESTA) appliziert werden.

### Beispiel 2

### Die Herstellung der Pulverslurry 2

Für die Herstellung der Pulverslurry 2 wurde das Beispiel 1 wiederholt, mit dem Unterschied, dass an Stelle des Emulgators (A1) des Herstellbeispiels 1 der Emulgator (A2) des Herstellbeispiels 2 verwendet wurde. Es wurden die gleichen vorteilhaften Ergebnisse erhalten.

### Beispiele 3 und 4

### Die Herstellung der Mehrschichtlackierungen 1 und 2

Für die Herstellung der Mehrschichtlackierung 1 des Beispiels 3 wurde die Pulverslurry 1 des Beispiels 1 verwendet.

Für die Herstellung der Mehrschichtlackierung 2 des Beispiels 4 wurde die Pulverslurry 2 des Beispiels 2 verwendet.

Für die Herstellung der Mehrschichtlackierungen 1 und 2 wurden in üblicher und bekannter Weise Prüftafeln der Abmessungen 10 cm x 20 cm hergestellt. Hierzu wurden Stahltafeln (Karosseriebleche), die mit üblichen und bekannten kathodisch abgeschiedenen und eingebrannten Elektrotauchlackierungen (KTL) beschichtet waren, mit einem handelsüblichen Dünnschichtfüller (Ecoprime® der Firma BASF Coatings AG) beschichtet, wonach die resultierende Füllerschichten während fünf Minuten bei 20°C und einer relativen Luftfeuchtigkeit von 65% abgelüftet und in einem Umluftofen während fünf Minuten bei 80°C getrocknet wurden. Hiernach wiesen die Füllerschichten eine Trockenschichtdicke von 15µm auf.

Nach dem Abkühlen der Prüftafeln auf 20°C wurden zweischichtige Wasserbasislackschichten aus den handelsüblichen Wasserbasislacken der Firma BASF Coatings AG Metrograu (Wasserbasislackschicht 1) und Atollblau (Wasserbasislackschicht 2) appliziert, während 5 Minuten bei 23 °C und während 10 Minuten bei 40°C bei einer relativen Luftfeuchtigkeit von 65% abgelüftet und in einem Umluftofen während 7 Minuten bei 80 °C getrocknet, so dass die getrockneten Basislackschichten eine Trockenschichtdicke von etwa 15 µm aufwiesen.

Nach dem erneuten Abkühlen der Prüftafeln auf 20°C wurden die Basislackschichten mit den erfindungsgemäßen Pulverslurries 1 oder 2 überschichtet. Dabei wurde bei Beispiel 3 die Pulverslurry 1 mittels ESTA appliziert. Bei Beispiel 4 wurde die Pulverslurry 2 pneumatisch appliziert.

Die resultierenden Pulverslurry-Klarlackschichten 1 und 2 wurden während 3 Minuten bei 20 °C und einer relativen Luftfeuchtigkeit von 65% abgelüftet und in einem Umluftofen während 5 Minuten bei 60°C getrocknet.

Nach der Applikation aller Schichten wurden sie gemeinsam während 30 Minuten bei 150°C eingebrannt, wodurch die Mehrschichtlackierungen 1 und 2 resultierten. Ihre Klarlackierungen 1 und 2 wiesen eine Schichtdicke von 40 µm auf.

Die Mehrschichtlackierungen 1 und 2 waren hoch glänzend und wiesen einen sehr guten Verlauf auf. Glanz und Haze wurden nach DIN 67530 gemessen.

Der Verlauf bzw. die Welligkeit wurden mit Hilfe der Wavescan-Methode gemessen. Zu diesem Zweck wurde ein Laserstrahl unter einem Winkel von 60° auf die Oberflächen gerichtet, und es wurde auf einer Messstrecke von 10 cm die Schwankungen des reflektierten Lichts im so genannten long wave-Bereich (0,6 bis 10 mm; Beobachtungabstand: 2,5 m) und im so genannten short wave-Bereich (0,1 bis 0,6 mm; Beobachtungsabstand: 45 cm) mit Hilfe eines Messgeräts registriert.

Die Ergebnisse finden sich in der Tabelle 1.

**Tabelle 1: Glanz und Verlauf der Mehrschichtlackierungen 1 und 2**

| | **Mehrschichtlackierung** | |
|---|---|---|
| | 1 | 2 |
| Glanz (20 °) | 87 | 86 |
| Haze | 17 | 26 |
| Verlauf (long wave/short wave) | 16/25 | 11/50 |

Die Ergebnisse untermauern, dass die Mehrschichtlackierungen 1 und 2 einen sehr guten Glanz und einen geringen Haze sowie einen sehr guten Verlauf aufwiesen.

Außerdem waren die Mehrschichtlackierungen 1 und 2 flexibel, hart und kratzfest und von einer hervorragenden Lösemittelbeständigkeit (mehr als 100 Doppelhübe im Methylethylketon-Test ohne Beschädigung) und einer guten Schwitzwasserbeständigkeit. Die Zwischenschichthaftung war sehr gut.

## Patentansprüche

1. Pulverlacksuspensionen (Pulverslurries), herstellbar in der Gegenwart mindestens eines Emulgators (A), wobei die Pulverslurries herstellbar sind, indem man
(1) mindestens eine flüssige Komponente (B), enthaltend mindestens einen flüssigen oder verflüssigten Bestandteil einer Pulverslurry oder eines Pulverlacks, in einem wässrigen Medium (C) emulgiert, wodurch eine wässrige Emulsion flüssiger Partikel (D) resultiert,
(2) die Emulsion abkühlen lässt, so dass sich eine Suspension dimensionsstabiler Partikel (D), d. h. die Pulverslurry, bildet,
**dadurch gekennzeichnet, dass** der Emulgator (A) eine Hydroxylzahl von 50 bis 250 mg KOH/g aufweist und aus der Gruppe der Copolymerisate, herstellbar durch ein-oder mehrstufige radikalische Copolymerisation in einem wässrigen Medium von
(a1) mindestens einem hydroxylgruppenhaltigen, olefinisch ungesättigten Monomer und
(a2) mindestens einem vom olefinisch ungesättigten Monomer (a1) verschiedenen olefinisch ungesättigten Terpenkohlenwasserstoff,
ausgewählt ist.

2. Pulverlacksuspensionen (Pulverslurries) nach Anspruch 1, **dadurch gekennzeichnet, dass** der Emulgator (A) in einer Menge eingesetzt ist, dass die wässrigen Emulsionen der flüssigen Partikel (D), jeweils bezogen auf ihren Festkörpergehalt, 0,01 bis 1 Gew.% (A) enthalten.

3. Pulverlacksuspensionen (Pulverslurries) nach Anspruch 1 oder 2, **dadurch gekennzeichnet, dass** die hydroxylgruppenhaltigen, olefinisch ungesättigten Monomeren (a1) aus der Gruppe, bestehend aus Hydroxyalkylester und Hydroxycycloalkylestern der Acrylsäure, Methacrylsäure, Ethacrylsäure, Crotonsäure, Maleinsäure, Fumarsäure oder Itaconsäure und Umsetzungsprodukten von cyclischen Estern mit diesen Hydroxyalkylestern und -cycloalkylestern sowie olefinisch ungesättigten Alkoholen, ausgewählt sind.

4. Pulverlacksuspensionen (Pulverslurries) nach Anspruch 3, **dadurch gekennzeichnet, dass** die hydroxylgruppenhaltigen, olefinisch ungesättigten Monomeren (a1) aus der Gruppe, bestehend aus 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat und -itaconat; 1,4-Bis(hydroxymethyl)cyclohexan-, Octahydro-4,7-methano-1H-inden-dimethanol- und Methylpropandiolmonoacrylat, -monomethacrylat, -monoethacrylat, -monocrotonat, -monomaleinat, -monofumarat und -monoitaconat; Umsetzungsprodukten von epsilon-Caprolacton mit diesen Hydroxyalkyl- und -cycloalkylestern; Allylalkohol und Trimethylolpropanmono- und -diallylether und Pentaerythritmono-, -di- und -triallylether, ausgewählt sind.

5. Pulverlacksuspensionen (Pulverslurries) nach einem der Ansprüche 1 bis 4, **dadurch gekennzeichnet, dass** der Terpenkohlenwasserstoff aus der Gruppe, bestehend aus acyclischen Diterpenen, monocyclischen Terpenen, bicyclischen Terpenen, acyclischen Sesquiterpenen, monocyclischen Sesquiterpenen, bicyclischen Sesquiterpenen, tricyclischen Sesquiterpenen, acyclischen Diterpenen, monocyclischen Diterpenen und tricyclischen Diterpenen, ausgewählt ist.

6. Pulverlacksuspensionen (Pulverslurries) nach einem der Ansprüche 1 bis 5, **dadurch gekennzeichnet, dass** der Terpenkohlenwasserstoff aus der Gruppe, bestehend aus acyclischen Monoterpenen, monocyclischen Terpenen und bicyclischen Terpenen, ausgewählt ist.

7. Pulverlacksuspensionen (Pulverslurries) nach einem der Ansprüche 1 bis 6, **dadurch gekennzeichnet, dass** der Terpenkohlenwasserstoff aus der Gruppe, bestehend aus Ocimen, Myrcen, den Menthenen, den Menthadienen, alpha-Pinen und beta-Pinen, ausgewählt ist.

8. Pulverlacksuspensionen (Pulverslurries) nach Anspruch 7, **dadurch gekennzeichnet, dass** die Menthadiene (a2) aus der Gruppe, bestehend aus alpha-Terpinen, beta-Terpinen, gamma-Terpinen, Terpinolen, alpha-Phellandren, beta-Phellandren, Limonen und Dipenten, ausgewählt sind.

9. Pulverlacksuspensionen (Pulverslurries) nach Anspruch 8, **dadurch gekennzeichnet, dass** gamma-Terpinen ausgewählt ist.

10. Pulverlacksuspensionen (Pulverslurries) nach einem der Ansprüche 1 bis 9, **dadurch gekennzeichnet, dass** die olefinisch ungesättigten Monomeren (a1) und (a2) mit mindestens einem hiervon verschiedenen olefinisch ungesättigten Monomeren (a3) copolymerisiert sind.

11. Pulverlacksuspensionen (Pulverslurries) nach Anspruch 10, **dadurch gekennzeichnet, dass** die olefinisch ungesättigten Monomeren (a3) aus der Gruppe der säuregruppenhaltigen, olefinisch ungesättigten Monomeren (a33) ausgewählt sind.

12. Pulverlacksuspensionen (Pulverslurries) nach Anspruch 11, **dadurch gekennzeichnet, dass** die säuregruppenhaltigen, olefinisch ungesättigten Monomeren (a33) aus der Gruppe, bestehend aus Acrylsäure, beta-Carboxyethylacrylat, Methacrylsäure, Ethacrylsäure, Crotonsäure, Maleinsäure, Fumarsäure und Itaconsäure; olefinisch ungesättigten Sulfon- oder Phosphonsäuren und deren Teilestern; sowie Maleinsäuremono-(meth)acryloyloxyethylester, Bernsteinsäuremono(meth)acryloyloxyethylester und Phthalsäuremono(meth)-acryloyloxyethylester, ausgewählt sind.

13. Pulverlacksuspensionen (Pulverslurries) nach Anspruch 11 oder 12, **dadurch gekennzeichnet, dass** die Emulgatoren (A) eine Säurezahl von 100 bis 400 mg KOH/g haben.

14. Pulverlacksuspensionen (Pulverslurries) nach einem der Ansprüche 1 bis 13, **dadurch gekennzeichnet, dass** der Emulgator (A) in dem wässrigen Medium (C) enthalten ist.

15. Verfahren zur Herstellung von Pulverlacksuspensionen (Pulverslurries) gemäß einem der Ansprüche 1 bis 14, **dadurch gekennzeichnet, dass** man
(1) mindestens eine flüssigen Komponente (B), enthaltend mindestens einen flüssigen oder verflüssigten Bestandteil einer Pulverslurry oder eines Pulverlacks, in einem wässrigen Medium (C) emulgiert, wodurch eine wässrige Emulsion flüssiger Partikel (D) resultiert, und
(2) die Emulsion abkühlen lässt, so dass sich eine Suspension dimensionsstabiler Partikel (D), d.h. die Pulverslurry, bildet.

16. Verfahren nach Anspruch 15, **dadurch gekennzeichnet, dass** das wässrige Medium (C) den Emulgator (A) in einer Menge, bezogen auf (C), von 0,01 bis 5 Gew.-% enthält.

17. Verfahren nach Anspruch 15 oder 16, **dadurch gekennzeichnet, dass** der Verfahrensschritt (1) bei einer Temperatur von 10 bis 150°C durchgeführt wird.

18. Verwendung der Pulverlacksuspensionen (Pulverslurries) gemäß einem der Ansprüche 1 bis 14 und der nach dem Verfahren gemäß einem der Ansprüche 15 bis 17 hergestellten Pulverlacksuspensionen (Pulverslurries) als Beschichtungsstoffe, Klebstoffe und Dichtungsmassen oder zur Herstellung von Beschichtungsstoffen, Klebstoffen und Dichtungsmassen.

19. Verwendung nach Anspruch 18, **dadurch gekennzeichnet, dass** die Beschichtungsstoffe, Klebstoffe und Dichtungsmassen der Herstellung von Beschichtungen, Klebschichten und Dichtungen dienen.

20. Verwendung nach Anspruch 19, **dadurch gekennzeichnet, dass** die Beschichtungen Mehrschichtlackierungen, umfassen mindestens eine Basislackierung und mindestens eine Klarlackierung, sind.

21. Verwendung von Copolymerisaten (A) einer Hydroxylzahl von 50 bis 250 mg KOH/g, herstellbar durch ein- oder mehrstufige radikalische Copolymerisation in einem wässrigen Medium von
(a1) mindestens einem olefinisch ungesättigten Monomer, wie in einem der Ansprüche 1, 3 oder 4 definiert, und
(a2) mindestens einem vom olefinisch ungesättigten Monomer (a1) verschiedenen, olefinisch ungesättigten Terpenkohlenwasserstoff, wie in einem der Ansprüche 1 oder 5 bis 9 definiert,
als Emulgatoren.

22. Verwendung nach Anspruch 21, **dadurch gekennzeichnet, dass** die olefinisch ungesättigten Monomeren (a1) und (a2) mit mindestens einem hiervon verschiedenen, olefinisch ungesättigten Monomeren (a3) copolymerisiert werden.

23. Verwendung nach Anspruch 22, **dadurch gekennzeichnet, dass** die olefinisch ungesättigten Monomere (a3) aus der Gruppe der säuregruppenhaltigen, olefinisch ungesättigten Monomeren ausgewählt werden.

24. Verwendung nach Anspruch 23, **dadurch gekennzeichnet, dass** die säuregruppenhaltigen, olefinisch ungesättigten Monomeren (a3) aus der Gruppe, bestehend aus Acrylsäure, beta-Carboxyethylacrylat, Methacrylsäure, Ethacrylsäure, Crotonsäure, Maleinsäure, Fumarsäure und Itaconsäure; olefinisch ungesättigten Sulfon- oder Phosphonsäuren und deren Teilestern; sowie Maleinsäuremono-(meth)acryloyloxyethylester, Bemsteinsäure-mono(meth)acryloyloxyethylester und Phthalsäuremono(meth)acryloyloxyethylester, ausgewählt werden.

25. Verwendung nach Anspruch 23 oder 24, **dadurch gekennzeichnet, dass** die Copolymerisate (A) eine Säurezahl von 100 bis 400 mg KOH/g haben.

## Claims

1. Powder coating suspensions (powder slurries) preparable in the presence of at least one emulsifier (A), the powder slurries being preparable by
(1) emulsifying at least one liquid component (B) comprising at least one liquid or liquified constituent of a powder slurry or of a powder coating material in an aqueous medium (C) to give an aqueous emulsion of liquid particles (D),
(2) cooling the emulsion to give a suspension of dimensionally stable particles (D), i.e., the powder slurry,
**characterized in that** the emulsifier (A) has a hydroxyl number of 50 to 250 mg KOH/g and is selected from the group of copolymers preparable by single-stage or multistage free-radical copolymerization, in an aqueous medium, of
(a1) at least one hydroxyl-containing, olefinically unsaturated monomer and
(a2) at least one olefinically unsaturated terpene hydrocarbon other than the olefinically unsaturated monomer (a1).

2. Powder coating suspensions (powder slurries) according to Claim 1, **characterized in that** the emulsifier (A) is used in an amount such that the aqueous emulsions of the liquid particles (D), based in each case on their solids content, contain from 0.01 to 1% by weight of (A).

3. Powder coating suspensions (powder slurries) according to Claim 1 or 2, **characterized in that** the hydroxyl-containing, olefinically unsaturated monomers (a1) are selected from the group consisting of hydroxyalkyl esters and hydroxycycloalkyl esters of acrylic acid, methacrylic acid, ethacrylic acid, crotonic acid, maleic acid, fumaric acid or itaconic acid and reaction products of cyclic esters with these hydroxyalkyl esters and hydroxycycloalkyl esters and also olefinically unsaturated alcohols.

4. Powder coating suspensions (powder slurries) according to Claim 3, **characterized in that** the hydroxyl-containing, olefinically unsaturated monomers (a1) are selected from the group consisting of 2-hydroxyethyl, 2-hydroxypropyl, 3-hydroxypropyl, 3-hydroxybutyl, 4-hydroxybutyl acrylate, methacrylate, ethacrylate, crotonate, maleate, fumarate, and itaconate; 1,4-bis(hydroxymethyl)cyclohexane, octahydro-4,7-methano-1H-indenedimethanol, and methylpropanediol monoacrylate, monomethacrylate, monoethacrylate, monocrotonate, monomaleate, monofumarate, and monoitaconate; reaction products of epsilon-caprolactone with these hydroxyalkyl and hydroxycycloalkyl esters; allyl alcohol, trimethylolpropane monoallyl and diallyl ether, and pentaerythritol monoallyl, diallyl and triallyl ether.

5. Powder coating suspensions (powder slurries) according to any one of Claims 1 to 4, **characterized in that** the terpene hydrocarbon (a22) is selected from the group consisting of acyclic diterpenes, monocyclic terpenes, bicyclic terpenes, acyclic sesquiterpenes, monocyclic sesquiterpenes, bicyclic sesquiterpenes, tricyclic sesquiterpenes, acyclic diterpenes, monocyclic diterpenes, and tricyclic diterpenes.

6. Powder coating suspensions (powder slurries) according to any one of Claims 1 to 5, **characterized in that** the terpene hydrocarbon is selected from the group consisting of acyclic monoterpenes, monocyclic terpenes, and bicyclic terpenes.

7. Powder coating suspensions (powder slurries) according to any one of Claims 1 to 6, **characterized in that** the terpene hydrocarbon is selected from the group consisting of ocimene, myrcene, the menthenes, the menthadienes, alpha-pinene, and beta-pinene.

8. Powder coating suspensions (powder slurries) according to Claim 7, **characterized in that** the menthadienes (a2) are selected from the group consisting of alpha-terpinene, beta-terpinene, gamma-terpinene, terpinolene, alpha-phellandrene, beta-phellandrene, limonene, and dipentene.

9. Powder coating suspensions (powder slurries) according to Claim 8, **characterized in that** gamma-terpinene is selected.

10. Powder coating suspensions (powder slurries) according to any one of Claims 1 to 9, **characterized in that** the olefinically unsaturated monomers (a1) and (a2) are copolymerized with at least one different olefinically unsaturated monomer (a3).

11. Powder coating suspensions (powder slurries) according to Claim 10, **characterized in that** the olefinically unsaturated monomers (a3) are selected from the group of olefinically unsaturated monomers (a33) containing acid groups.

12. Powder coating suspensions (powder slurries) according to Claim 11, **characterized in that** the olefinically unsaturated monomers (a33) containing acid groups are selected from the group consisting of acrylic acid, beta-carboxyethyl acrylate, methacrylic acid, ethacrylic acid, crotonic acid, maleic acid, fumaric acid, and itaconic acid; olefinically unsaturated sulfonic or phosphonic acids and their partial esters; and also mono(meth)acryloyloxyethyl maleate, succinate, and phthalate.

13. Powder coating suspensions (powder slurries) according to Claim 11 or 12, **characterized in that** the emulsifiers (A) have an acid number of 100 to 400 mg KOH/g.

14. Powder coating suspensions (powder slurries) according to any one of Claims 1 to 13, **characterized in that** the emulsifier (A) is present in the aqueous medium (C).

15. Process for preparing powder coating suspensions (powder slurries) according to any one of Claims 1 to 14, **characterized in that**
(1) at least one liquid component (B) comprising at least one liquid or liquified constituent of a powder slurry or of a powder coating material is emulsified in an aqueous medium (C) to give an aqueous emulsion of liquid particles (D), and
(2) the emulsion is cooled to give a suspension of dimensionally stable particles (D), i.e., the powder slurry.

16. Process according to Claim 15, **characterized in that** the aqueous medium (C) contains the emulsifier (A) in an amount, based on (C), of 0.01 to 5% by weight.

17. Process according to Claim 15 or 16, **characterized in that** step (1) is carried out at a temperature of 10 to 150°C.

18. Use of powder coating suspensions (powder slurries) according to any one of Claims 1 to 14 and of powder coating suspensions (powder slurries) prepared by the process according to any one of Claims 15 to 17 as coating materials, adhesives and sealing compounds or for producing coating materials, adhesives, and sealing compounds.

19. Use according to Claim 18, **characterized in that** the coating materials, adhesives and sealing compounds serve for producing coatings, adhesive layers and seals.

20. Use according to Claim 19, **characterized in that** the coatings are multicoat paint systems comprising at least one basecoat and at least one clearcoat.

21. Use of copolymers (A) having a hydroxyl number of 50 to 250 mg KOH/g, preparable by single-stage or multistage free-radical copolymerization in an aqueous medium of
(a1) at least one olefinically unsaturated monomer as defined in any one of Claims 1, 3, and 4, and
(a2) at least one olefinically unsaturated terpene hydrocarbon other than the olefinically unsaturated monomer (a1), as defined in any one of Claims 1 and 5 to 9,
as emulsifiers.

22. Use according to Claim 21, **characterized in that** the olefinically unsaturated monomers (a1) and (a2) are copolymerized with at least one olefinically unsaturated monomer (a3) different therefrom.

23. Use according to Claim 22, **characterized in that** the olefinically unsaturated monomers (a3) are selected from the group of olefinically unsaturated monomers containing acid groups.

24. Use according to Claim 23, **characterized in that** the olefinically unsaturated monomers (a3) containing acid groups are selected from the group consisting of acrylic acid, beta-carboxyethyl acrylate, methacrylic acid, ethacrylic acid, crotonic acid, maleic acid, fumaric acid, and itaconic acid; olefinically unsaturated sulfonic or phosphonic acids and their partial esters; and also mono(meth)acryloyloxyethyl maleate, succinate, and phthalate.

25. Use according to Claim 23 or 24, **characterized in that** the copolymers (A) have an acid number of 100 to 400 mg KOH/g.

## Revendications

1. Suspensions de laque en poudre (suspensions de poudre), pouvant être préparées en présence d'au moins un émulsifiant (A), où les suspensions de poudre peuvent être préparées
(1) en ce qu'on émulsionne au moins un composant liquide (B), contenant au moins un constituant liquide ou liquéfié d'une suspension de poudre ou d'une laque en poudre, dans un milieu aqueux (C), suite à quoi on obtient une émulsion aqueuse de particules liquides (D),
(2) en ce qu'on laisse refroidir l'émulsion, de manière telle qu'il se forme une suspension de particules de dimensions stables (D), c'est-à-dire la suspension de poudre,
**caractérisées en ce que** l'émulsifiant (A) présente un indice hydroxyle de 50 à 250 mg de KOH/g et est choisi dans le groupe formé par les copolymères, pouvant être préparés par une copolymérisation radicalaire en une ou plusieurs étapes dans un milieu aqueux
(a1) d'au moins un monomère oléfiniquement insaturé contenant des groupes hydroxyle et
(a2) d'au moins un hydrocarbure terpénique oléfiniquement insaturé, différent du monomère (a1) oléfiniquement insaturé.

2. Suspensions de laque en poudre (suspensions de poudre) selon la revendication 1, **caractérisées en ce que** l'émulsifiant (A) est utilisé en une quantité telle que les émulsions aqueuses des particules liquides (D) contiennent 0,01 à 1% en poids de (A) à chaque fois par rapport à leur teneur en corps solides.

3. Suspensions de laque en poudre (suspensions de poudre) selon la revendication 1 ou 2, **caractérisées en ce que** les monomères oléfiniquement insaturés, contenant des groupes hydroxyle (a1) sont choisis dans le groupe constitué par les esters hydroxyalkyliques et hydroxycycloalkyliques de l'acide acrylique, méthacrylique, éthacrylique, crotonique, maléique, fumarique ou itaconique et les produits de transformation d'esters cycliques avec ces esters hydroxyalkyliques et hydroxycycloalkyliques ainsi que des alcools oléfiniquement insaturés.

4. Suspensions de laque en poudre (suspensions de poudre) selon la revendication 3, **caractérisées en ce que** les monomères oléfiniquement insaturés contenant des groupes hydroxyle (a1) sont choisis dans le groupe constitué par l'acrylate, le méthacrylate, l'éthacrylate, le crotonate, le maléinate, le fumarate et l'itaconate de 2-hydroxyéthyle, de 2-hydroxypropyle, de 3-hydroxypropyle, de 3-hydroxybutyle, de 4-hydroxybutyle ; le monoacrylate, le monométhacrylate, le monoéthacrylate, le monocrotonate, le monomaléinate, le monofumarate et le monoitaconate de 1,4-bis(hydroxyméthyl)cyclohexane, d'octahydro-4,7-méthano-1H-indènediméthanol et de méthylpropanediol ; les produits de transformation d'epsilon-caprolactone avec ces esters hydroxyalkyliques et hydroxycycloalkyliques ; l'alcool allylique et le triméthylolpropanemonoallyléther et le triméthylolpropanediallyléther et le pentaérythritolmonoallyléther, le pentaérythritoldiallyléther et le pentaérythritoltriallyléther.

5. Suspensions de laque en poudre (suspensions de poudre) selon l'une quelconque des revendications 1 à 4, **caractérisées en ce que** l'hydrocarbure terpénique est choisi dans le groupe constitué par les diterpènes acycliques, les terpènes monocycliques, les terpènes bicycliques, les sesquiterpènes acycliques, les sesquiterpènes monocycliques, les sesquiterpènes bicycliques, les sesquiterpènes tricycliques, les diterpènes acycliques, les diterpènes monocycliques et les diterpènes tricycliques.

6. Suspensions de laque en poudre (suspensions de poudre) selon l'une quelconque des revendications 1 à 5, **caractérisées en ce que** l'hydrocarbure terpénique est choisi dans le groupe constitué par les monoterpènes acycliques, les terpènes monocycliques et les terpènes bicycliques.

7. Suspensions de laque en poudre (suspensions de poudre) selon l'une quelconque des revendications 1 à 6, **caractérisées en ce que** l'hydrocarbure terpénique est choisi dans le groupe constitué par les ocimènes, le myrcène, les menthènes, les menthadiènes, l'alpha-pinène et le bêta-pinène.

8. Suspensions de laque en poudre (suspensions de poudre) selon la revendication 7, **caractérisées en ce que** les menthadiènes (a2) sont choisis dans le groupe constitué par l'alpha-terpinène, le bêta-terpinène, le gamma-terpinène, les terpinols, l'alpha-phellandrène, le beta-phellandrène, le limonène et le dipentène.

9. Suspensions de laque en poudre (suspensions de poudre) selon la revendication 8, **caractérisées en ce qu'**on choisit le gamma-terpinène.

10. Suspensions de laque en poudre (suspensions de poudre) selon l'une quelconque des revendications 1 à 9, **caractérisées en ce que** les monomères (a1) et (a2) oléfiniquement insaturés sont copolymérisés avec au moins un monomère (a3) oléfiniquement insaturé différent de ceux-ci.

11. Suspensions de laque en poudre (suspensions de poudre) selon la revendication 10, **caractérisées en ce que** les monomères (a3) oléfiniquement insaturés sont choisis dans le groupe des monomères (a33) oléfiniquement insaturés, contenant des groupes acides.

12. Suspensions de laque en poudre (suspensions de poudre) selon la revendication 11, **caractérisées en ce que** les monomères (a33) oléfiniquement insaturés, contenant les groupes acides sont choisis dans le groupe constitué par l'acide acrylique, l'acrylate de bêta-carboxyéthyle, l'acide méthacrylique, l'acide éthacrylique, l'acide crotonique, l'acide maléique, l'acide fumarique et l'acide itaconique ; les acides sulfoniques ou phosphoniques oléfiniquement insaturés et leurs esters partiels ; ainsi que l'ester mono(méth)acryloyloxyéthylique de l'acide maléique, l'ester mono(méth)acryloyloxyéthylique de l'acide succinique et l'ester mono(méth)acryloyloxyéthylique de l'acide phtalique.

13. Suspensions de laque en poudre (suspensions de poudre) selon la revendication 11 ou 12, **caractérisées en ce que** les émulsifiants (A) présentent un indice d'acide de 100 à 400 mg de KOH/g.

14. Suspensions de laque en poudre (suspensions de poudre) selon l'une quelconque des revendications 1 à 13, **caractérisées en ce que** l'émulsifiant (A) est contenu dans le milieu aqueux (C).

15. Procédé pour la préparation de suspensions de laque en poudre (suspensions de poudre) selon l'une quelconque des revendications 1 à 14, **caractérisées en ce qu'**on
(1) émulsionne au moins un composant liquide (B), contenant au moins un constituant liquide ou liquéfié d'une suspension de poudre ou d'une laque en poudre, dans un milieu aqueux (C), suite à quoi on obtient une émulsion aqueuse de particules liquides (D), et
(2) laisse refroidir l'émulsion, de manière telle qu'il se forme une suspension de particules de dimensions stables (D), c'est-à-dire la suspension de poudre.

16. Procédé selon la revendication 15, **caractérisé en ce que** le milieu aqueux (C) contient l'émulsifiant (A) en une quantité, par rapport à (C), de 0,01 à 5% en poids.

17. Procédé selon la revendication 15 ou 16, **caractérisé en ce que** l'étape de procédé (1) est réalisée à une température de 10 à 150°C.

18. Utilisation des suspensions de laque en poudre (suspensions de poudre) selon l'une quelconque des revendications 1 à 14 et les suspensions de laque en poudre (suspensions de poudre) préparées selon le procédé selon l'une quelconque des revendications 15 à 17 comme substances de revêtement, adhésifs et masses d'étanchéité ou pour la production de substances de revêtement, d'adhésifs et de masses d'étanchéité.

19. Utilisation selon la revendication 18, **caractérisée en ce que** les substances de revêtement, les adhésifs et les masses d'étanchéité servent à la réalisation de revêtements, de couches adhésives et de joints.

20. Utilisation selon la revendication 19, **caractérisée en ce que** les revêtements sont des laquages à plusieurs couches, comprenant au moins un laquage de base et au moins un laquage clair.

21. Utilisation de copolymères (A) présentant un indice hydroxyle de 50 à 250 mg de KOH/g, pouvant être préparés par une copolymérisation radicalaire en une ou plusieurs étapes, dans un milieu aqueux,
(a1) d'au moins un monomère oléfiniquement insaturé tel que défini dans l'une quelconque des revendications 1, 3 ou 4 et
(a2) d'au moins un hydrocarbure terpénique oléfiniquement insaturé, différent du monomère (a1) oléfiniquement insaturé, tel que défini dans l'une quelconque des revendications 1 ou 5 à 9, comme émulsifiants.

22. Utilisation selon la revendication 21, **caractérisée en ce que** les monomères (a1) et (a2) oléfiniquement insaturés sont copolymérisés avec au moins un monomère (a3) oléfiniquement insaturé différent de ceux-ci.

23. Utilisation selon la revendication 22, **caractérisée en ce que** les monomères (a3) oléfiniquement insaturés sont choisis dans le groupe des monomères oléfiniquement insaturés, contenant des groupes acides.

24. Utilisation selon la revendication 23, **caractérisée en ce que** les monomères (a3) oléfiniquement insaturés, contenant les groupes acides sont choisis dans le groupe constitué par l'acide acrylique, l'acrylate de bêta-carboxyéthyle, l'acide méthacrylique, l'acide éthacrylique, l'acide crotonique, l'acide maléique, l'acide fumarique et l'acide itaconique ; les acides sulfoniques ou phosphoniques oléfiniquement insaturés et leurs esters partiels ; ainsi que l'ester mono(méth)acryloyloxyéthylique de l'acide maléique, l'ester mono(méth)acryloyloxyéthylique de l'acide succinique et l'ester mono(méth)acryloyloxyéthylique de l'acide phtalique.

25. Utilisation selon la revendication 23 ou 24, **caractérisée en ce que** les copolymères (A) présentent un indice d'acide de 100 à 400 mg de KOH/g.
